# EUROPEAN PATENT APPLICATION

(11) **EP 3 517 240 A1**
(43) Date of publication of application: **31.07.2019**
(21) Application number: 17852761.0
(22) Date of filing: 25.08.2017
(51) Int. Cl.: B23K 9/23, B21D 22/02, B23K 9/02, B23K 9/235

(54) **ARC WELDING METHOD FOR JOINING DIFFERENT MATERIALS, JOINING ASSISTANCE MEMBER, AND DIFFERENT MATERIAL WELDED JOINT**

(30) Priority: 20.09.2016 JP 2016182964
(71) Applicant: Kabushiki Kaisha Kobe Seiko Sho (Kobe Steel, Ltd.), Kobe-shi, Hyogo 651-8585 (JP)
(72) Inventor: SUZUKI Reiichi, Kanagawa 251-8551 (JP)
(74) Representative: Müller-Boré & Partner Patentanwälte PartG mbB
(86) International application number: PCT/JP2017/030611
(87) International publication number: WO 2018/055982

(57) **Abstract**

A different material welded joint (1) that comprises: an aluminum alloy or magnesium alloy upper plate (10); and a steel lower plate (20) that is arc welded to the upper plate (10). The upper plate (10) has a non-circular hole (11) that does not measure the same lengthwise and widthwise. The different material welded joint (1) also comprises a steel joining assistance member (30) that: has a stepped outer shape that has an inserted part (31) and a not-inserted part (32); and has formed therein a non-circular hollow part (33) that passes through the inserted part (31) and the not-inserted part (32) and does not measure the same lengthwise and widthwise. The joining assistance member (30) is arranged upon the upper plate (10) such that the hollow part (33) and the hole (11) in the upper plate (10) are coaxial and the long-axis directions (aₓ, bₓ) thereof coincide. The hollow part (33) of the joining assistance member (30) is filled with an iron alloy or Ni alloy weld metal layer (40). A fused part (W) is formed from the weld metal layer (40) and fused parts of the lower plate (20) and the joining assistance member (30).

## Description

### TECHNICAL FIELD

The present invention relates to an arc welding method for dissimilar material joining, a joining assist member, and a dissimilar material welded joint.

### BACKGROUND ART

Transport equipment as typified by automobiles is always required to be increased in drive fuel efficiency for the purpose of suppressing various items such as (a) the consumption of petroleum fuels which are limited resources, (b) CO₂ which is a global warming gas generated with burning, and (c) the running cost. Among means as an improvement measure is vehicle weight reduction as well as improvements in motive force-related technologies such as use of electric driving. One means for weight reduction is to replace steel which is a current main material with light materials such as aluminum alloys, magnesium alloys, carbon fiber, etc. However, replacing all of the materials with such light materials has problems such as cost increase and insufficiency in strength. As a countermeasure against these problems, a design method so called "multi-material" in which a proper combination of steel and a light material are used at each location is now attracting attention.

Combining steel and any of the above-described light materials necessarily results in occurrence of a position where to join these materials. Whereas steel materials, aluminum alloy materials, or magnesium alloy materials can be welded to each other easily, it is known that welding of different materials is very difficult. This is because intermetallic compounds (IMCs) which are very fragile are formed in a melt-mixing portion between steel and aluminum or magnesium and destroyed easily when receiving external stress caused by tension, impact, or the like. As a result, such welding methods as the resistance spot welding method and the arc welding method cannot be used for dissimilar material joining and it is common to use other joining methods. Welding cannot be used for joining of steel and carbon fiber because the latter is not a metal.

Among conventional dissimilar material joining techniques is, for example, a means in which through-holes are formed through both of a steel material and a light material and they are bound together by pressing them against each other from both sides using a bolt and a nut. Another example means is known in which materials are bound together by a swaging effect by inserting a swaging member from one side by applying a strong pressure to it (refer to Patent document 1, for example).

A still another example means is proposed in which a steel joining member is pushed, as a punch, into an aluminum alloy material, whereby a hole is formed and the joining member is bound tentatively. Subsequently, the aluminum alloy material is overlapped with a steel material, the two kinds of members are sandwiched between copper electrodes from both sides, and the steel material and the joining member are resistance-welded to each other by applying pressure and large current to them instantaneously. (Refer to Patent document 2, for example.)

A further example means has been developed in which an aluminum alloy material and a steel material are joined together directly using a friction stir joining tool (refer to Patent document 3, for example).

### Prior Art Documents

### Patent Documents

Patent document 1: JP-A-2002-174219
Patent document 2: JP-A-2009-285678
Patent document 3: Japanese Patent No. 5,044,128

### SUMMARY OF THE INVENTION

### Problems to be Solved by the Invention

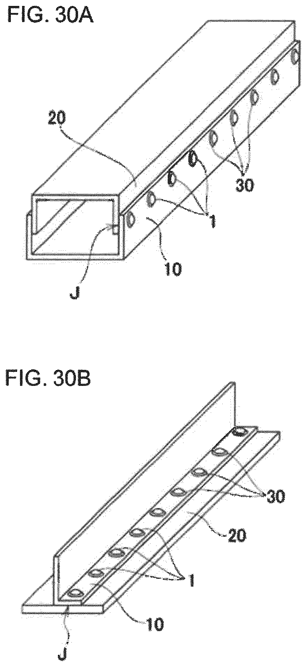

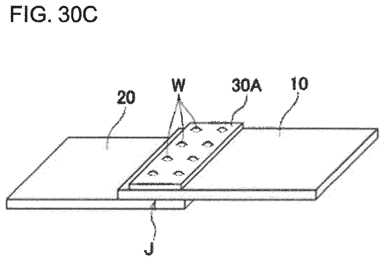

However, the bolt-nut joining method cannot be applied to a case that a steel material and a light material form a structure having a closed cross section (see FIG. 30A) because nuts cannot be inserted. Even in the case of a joint having an open section structure to which this method is applicable (see FIG 30B and FIG. 30C), another problem of low efficiency arises because screwing nuts into the materials takes time.

Though the joining method disclosed in Patent document 1 is a relatively easy method, it is associated with a problem that the swaging member cannot be inserted in the case where the steel material is high in strength and a problem that high joining strength cannot be obtained because the joining strength depends on the frictional force and the stiffness of the swaging member. There is another problem that this joining method cannot be applied to a closed section structure because it is necessary to press the swaging member by a jig from the front side and the back side in inserting the swaging member.

The joining method disclosed in Patent document 2 cannot be applied to a closed section structure, either. And there is another problem that a facility for a resistance welding method is very expensive.

As for the joining method disclosed in Patent document 3, where pressure is applied to the surface of a steel material while an aluminum alloy material is caused to flow plastically in a low temperature range, the two materials do not melt-mix with each other, necessary metallic bonding force can be obtained without formation of intermetallic compounds. There exists a study report stating that joining of steel and carbon fiber is also possible. However, this joining method is associated with problems that it cannot be applied to a closed section structure either, and that it requires a large mechanical facility and hence is expensive because high pressure needs to be generated. Furthermore, resulting joining force is not very strong.

As such, each of the existing dissimilar material joining techniques has one or more of the problems that (i) the materials and the groove shape are restricted to ones suitable for an open section structure, (ii) the joining strength is low, and (iii) the facility cost is high. Thus, to spread multi-material designing that enables combination of various kinds of materials, a new technique is desired that is easy to use and satisfies all of conditions of (i') being applicable to both of an open section structure and a closed section structure, (ii') attaining sufficiently high joining strength and being high in reliability, and (iii') being low in cost.

The present invention has been made in view of the above problems, and an object of the invention is therefore to provide an arc welding method for dissimilar material joining, a joining assist member, and a dissimilar material welded joint that make it possible to join different materials, that is, steel and an aluminum alloy (hereinafter also referred to as "Al alloy") or a magnesium alloy (hereinafter also referred to as "Mg alloy"), with quality of being high in strength and reliability using an inexpensive facility already available on the market, and that can be applied to both of an open section structure and a closed section structure with no limitations.

### Means for Solving the Problems

To melt-join steel and an Al alloy or an Mg alloy, formation of intermetallic compounds (IMCs) is unavoidable as mentioned above. On the other hand, it is apparent scientifically and empirically that steel-to-steel welding provides highest joining strength and reliability.

In view of the above, the inventors have conceived a means capable of joining to steel by binding force by using steel-to-steel welding to obtain connection force.

### Means for Solving the Problems

The above object of the invention is thus attained by the constitutions and configurations described below:
(1) An arc welding method for dissimilar material joining for joining a first plate made of an aluminum alloy or a magnesium alloy and a second plate made of steel, the method including:
   a step of making a non-circular hole having different longitudinal and lateral lengths through the first plate;
   a step of overlapping the first plate with the second plate;
   a step of inserting a joining assist member made of steel into the hole formed in the first plate, the joining assist member having a stepped external shape including an insertion portion and a non-insertion portion and having a non-circular hollow portion having different longitudinal and lateral lengths formed to penetrate through the insertion portion and the non-insertion portion; and
   a step of filling the hollow portion of the joining assist member with a weld metal and welding the second plate and the joining assist member by any method of the following (a) to (e):
      (a) a gas-shielded arc welding method using, as a consumable electrode, a welding wire to provide the weld metal made of an iron alloy or a nickel alloy;
      (b) a non-gas arc welding method using the welding wire as a consumable electrode;
      (c) a gas tungsten arc welding method using the welding wire as a non-consumable electrode filler;
      (d) a plasma arc welding method using the welding wire as a non-consumable electrode filler; and
      (e) a coated arc welding method using, as a consumable electrode, a coated arc welding rod to provide the weld metal made of an iron alloy or a nickel alloy.
(2) The arc welding method for dissimilar material joining according to (1), wherein the second plate has a swell portion formed by drawing, and the swell portion of the second plate is placed in the hole of the first plate in the overlapping step.
(3) The arc welding method for dissimilar material joining according to (1) or (2), further including, before the overlapping step, a step of applying an adhesive to at least one of overlapped surfaces of the first plate and the second plate around the hole over its entire circumference.
(4) The arc welding method for dissimilar material joining according to any one of (1) to (3), wherein in the placing step, an adhesive is applied to at least one of confronting surfaces between the joining assist member and the first plate opposed to the joining assist member.
(5) The arc welding method for dissimilar material joining according to any one of (1) to (4), wherein in the placing step or after the filling and welding step, an adhesive is applied to a boundary between the joining assist member and a surface of the first plate.
(6) The arc welding method for dissimilar material joining according to any one of (1) to (5), wherein the insertion portion of the joining assist member has a height P_{H1} of 10% or larger and 100% or smaller of a thickness B_{H} of the first plate.
(7) The arc welding method for dissimilar material joining according to any one of (1) to (6), wherein the insertion portion of the joining assist member has a longer-axis length P_{DX1} of 80% or larger and 105% or smaller of a longer-axis length B_{DX} of the hole of the first plate.
(8) The arc welding method for dissimilar material joining according to any one of (1) to (7), wherein the insertion portion of the joining assist member has a shorter-axis length P_{DY1} of 80% or larger and 105% or smaller of a shorter-axis length B_{DY} of the hole of the first plate.
(9) The arc welding method for dissimilar material joining according to any one of (1) to (8), wherein the non-insertion portion of the joining assist member has a longer-axis length P_{DX2} of 105% or larger of a longer-axis length B_{DX} of the hole 11 of the first plate.
(10) The arc welding method for dissimilar material joining according to any one of (1) to (9), wherein the non-insertion portion of the joining assist member has a shorter-axis length P_{DY2} of 105% or larger of a shorter-axis length B_{DY} of the hole 11 of the first plate.
(11) The arc welding method for dissimilar material joining according to any one of (1) to (10), wherein the non-insertion portion of the joining assist member has a thickness P_{H2} of 50% or larger and 150% or smaller of a thickness B_{H} of the first plate.
(12) The arc welding method for dissimilar material joining according to any one of (1) to (11), wherein in the filling and welding step, an excess weld metal is formed on a surface of the joining assist member and the excess weld metal has a longer-axis length W_{DX} of 105% or larger of a longer-axis length P_{SX} of the hollow portion of the joining assist member.
(13) The arc welding method for dissimilar material joining according to any one of (1) to (12), wherein in the filling and welding step, an excess weld metal is formed on a surface of the joining assist member and the excess weld metal has a shorter-axis length W_{DY} of 105% or larger of a shorter-axis length P_{SY} of the hollow portion of the joining assist member.
(14) A joining assist member to be used for the arc welding method for dissimilar material joining according to any one of (1) to (13), the joining assist member being made of steel, having a stepped external shape including an insertion portion and a non-insertion portion, and having a non-circular hollow portion having different longitudinal and lateral lengths formed to penetrate through the insertion portion and the non-insertion portion.
(15) A dissimilar material welded joint including a first plate made of an aluminum alloy or a magnesium alloy and a second plate made of steel that is arc-welded to the first plate,
   wherein the first plate has a non-circular hole having different longitudinal and lateral lengths that reaches an overlapped surface to the second plate,
   the dissimilar material welded joint further includes a joining assist member made of steel, the joining assist member having a stepped external shape including an insertion portion inserted in the hole formed in the first plate and a non-insertion portion, and having a non-circular hollow portion having different longitudinal and lateral lengths formed to penetrate through the insertion portion and the non-insertion portion, and
   the hollow portion of the joining assist member is filled with a weld metal made of an iron alloy or a nickel alloy, and a melting portion is formed of the weld metal and a part of melted portions of the second plate and the joining assist member.
(16) The dissimilar material welded joint according to (15), wherein a swell portion formed in the second plate is placed in the hole of the first plate.
(17) The dissimilar material welded joint according to (15) or (16), further including an adhesive applied to at least one of overlapped surfaces of the first plate and the second plate around the hole over its entire circumference.
(18) The dissimilar material welded joint according to any one of (15) to (17), further including an adhesive applied to at least one of confronting surfaces between the joining assist member and the first plate opposed to the non-insertion portion.
(19) The dissimilar material welded joint according to any one of (15) to (18), further including an adhesive applied to a boundary between the joining assist member and a surface of the first plate.
(20) The dissimilar material welded joint according to any one of (15) to (19), wherein the insertion portion of the joining assist member has a height P_{H1} of 10% or larger and 100% or smaller of a thickness B_{H} of the first plate.
(21) The dissimilar material welded joint according to any one of (15) to (20), wherein the insertion portion of the joining assist member has a longer-axis length P_{DX1} of 80% or larger and 105% or smaller of a longer-axis length B_{DX} of the hole of the first plate.
(22) The dissimilar material welded joint according to any one of (15) to (21), wherein the insertion portion of the joining assist member has a shorter-axis length P_{DY1} of 80% or larger and 105% or smaller of a shorter-axis length B_{DY} of the hole of the first plate.
(23) The dissimilar material welded joint according to any one of (15) to (22), wherein the non-insertion portion of the joining assist member has a longer-axis length P_{DX2} of 105% or larger of a longer-axis length B_{DX} of the hole of the first plate.
(24) The dissimilar material welded joint according to any one of (15) to (23), wherein the non-insertion portion of the joining assist member has a shorter-axis length P_{DY2} of 105% or larger of a shorter-axis length B_{DY} of the hole of the first plate.
(25) The dissimilar material welded joint according to any one of (15) to (24), wherein the non-insertion portion of the joining assist member has a thickness P_{H2} of 50% or larger and 150% or smaller of a thickness B_{H} of the first plate.
(26) The dissimilar material welded joint according to any one of (15) to (25), wherein an excess weld metal is formed on a surface of the joining assist member and the excess weld metal has a longer-axis length W_{DX} of 105% or larger of a longer-axis length P_{SX} of the hollow portion of the joining assist member.
(27) The dissimilar material welded joint according to any one of (15) to (26), wherein an excess weld metal is formed on a surface of the joining assist member and the excess weld metal has a shorter-axis length W_{DY} of 105% or larger of a shorter-axis length P_{SY} of the hollow portion of the joining assist member.

### Advantages of the Invention

The invention makes it possible to join different materials, that is, steel and an aluminum alloy or a magnesium alloy, with quality of being high in strength and reliability using an inexpensive arc welding facility and enables application to both of an open cross section structure and an enclosed cross section structure with no limitations.

### BRIEF DESCRIPTION OF THE DRAWINGS

FIG. 1A is a perspective view of a dissimilar material welded joint according to an embodiment of the present invention.
FIG. 1B is a sectional view of the dissimilar material welded joint taken along line Ib-Ib in FIG. 1A.
FIG. 1C is a sectional view of the dissimilar material welded joint taken along line Ic-Ic in FIG. 1A.
FIG. 2A shows boring work of an arc welding method for dissimilar material joining according to the embodiment.
FIG. 2B shows overlapping work of the arc welding method for dissimilar material joining according to the embodiment.
FIG. 2C shows insertion work of the arc welding method for dissimilar material joining according to the embodiment.
FIG. 2D shows welding work of the arc welding method for dissimilar material joining according to the embodiment.
FIG. 3A is a front view of a joining assist member according to a first modification.
FIG. 3B is a front view of a joining assist member according to a second modification.
FIG. 3C is a front view of a joining assist member according to a third modification.
FIG. 3D is a front view of a joining assist member according to a fourth modification.
FIG. 3E is a front view of a joining assist member according to a fifth modification.
FIG. 3F is a front view of a joining assist member according to a sixth modification.
FIG. 3G is a front view of a joining assist member according to a seventh modification.
FIG. 4A shows a first step of an example of boring work.
FIG. 4B shows a second step of the example of boring work.
FIG. 4C shows a third step of the example of boring work.
FIG. 4D shows a fourth step of the example of boring work.
FIG. 5A is a sectional view of a dissimilar material welded joint in which no excess weld metal is formed.
FIG. 5B is a sectional view showing a state where external forces are acting on the dissimilar material welded joint shown in FIG. 5A in a thickness direction (three-dimensional direction).
FIG. 6 is a sectional view showing a state where external forces are acting on the dissimilar material welded joint shown in FIG. 1B in a thickness direction (three-dimensional direction).
FIG. 7A is a sectional view of a dissimilar material welded joint for description of weld penetration of a weld metal.
FIG. 7B is a sectional view of a dissimilar material welded joint for description of weld penetration of a weld metal.
FIG. 8A is a perspective view of a dissimilar material welded joint as a comparative example in which a top plate made of aluminum and a bottom plate made of steel are overlapped and welded by penetration welding.
FIG. 8B is a sectional view of the dissimilar material welded joint shown in FIG. 8A.
FIG. 9A is a sectional view showing a state where shearing tension is acting on the dissimilar material welded joint shown in FIG. 8A.
FIG. 9B is a perspective view of the dissimilar material welded joint shown in FIG. 9A.
FIG. 10A is a sectional view showing a state where vertical peeling tension is acting on the dissimilar material welded joint shown in FIG. 8A.
FIG. 10B is a perspective view of the dissimilar material welded joint shown in FIG. 10A.
FIG. 11A is a perspective view of a dissimilar material welded joint as a comparative example in which a top plate made of aluminum and having a hole and a bottom plate made of steel are overlapped and welded by penetration welding.
FIG. 11B is a sectional view of the dissimilar material welded joint shown in FIG. 11A.
FIG. 12A is a sectional view showing a state where shearing tension is acting on the dissimilar material welded joint shown in FIG. 11A.
FIG. 12B is a perspective view showing a state where shearing tension is acting on the dissimilar material welded joint shown in FIG. 11A and the joining portion is inclined by close to 90°.
FIG. 13A is a sectional view showing a state where vertical peeling tension is acting on the dissimilar material welded joint shown in FIG. 11A.
FIG. 13B is a perspective view of the dissimilar material welded joint shown in FIG. 13A.
FIG. 14A is a sectional view of the dissimilar material welded joint according to the embodiment.
FIG. 14B is a sectional view taken along line XIV-XIV in FIG. 14A.
FIG. 15A is a sectional view showing a state where shearing tension is acting on the dissimilar material welded joint according to the embodiment.
FIG. 15B is a sectional view showing a state where shearing tension is acting on the dissimilar material welded joint according to the embodiment in which intermetallic compounds are formed.
FIG. 16A is a sectional view of the top plate, the bottom plate, and the joining assist member showing a state before arc welding where a gap exists between the top plate and the bottom plate.
FIG. 16B is a sectional view of the dissimilar material welded joint showing a state after the arc welding together with thermal contraction forces.
FIG. 17 is a top view of the top plate and the joining assist member for description of dimensional relationships of the joining assist member.
FIG. 18A is a sectional view, taken along the longer-axis direction, of the top plate, the bottom plate, and the joining assist member for description of dimensional relationships of the joining assist member.
FIG. 18B is a sectional view, taken along the shorter-axis direction, of the top plate, the bottom plate, and the joining assist member for description of dimensional relationships of the joining assist member.
FIG. 19 is a sectional view showing a state where stress in the shearing direction is acting on a dissimilar material welded joint in which the diameter of the insertion portion of the joining assist member is too small.
FIG. 20 is a sectional view showing a state where stress in the vertical peeling direction is acting on a dissimilar material welded joint in which the diameter of the non-insertion portion of the joining assist member is too small.
FIG. 21A is a perspective view of the top plate and the bottom plate for description of an arc welding method for dissimilar material joining according to a first modification.
FIG. 21B is a sectional view of the top plate and the bottom plate for description of the arc welding method for dissimilar material joining according to the first modification.
FIG. 22A is a perspective view of the top plate and the bottom plate for description of an arc welding method for dissimilar material joining according to a second modification.
FIG. 22B is a sectional view of the top plate and the bottom plate for description of the arc welding method for dissimilar material joining according to the second modification.
FIG. 23A is a perspective view of the top plate, the bottom plate, and the joining assist member for description of an arc welding method for dissimilar material joining according to a third modification.
FIG. 23B is a sectional view of the top plate, the bottom plate, and the joining assist member for description of the arc welding method for dissimilar material joining according to the third modification.
FIG. 24 shows a state where arc welding is being performed in a horizontal posture in the third modification.
FIG. 25A is a perspective view of a dissimilar material welded joint for description of an arc welding method for dissimilar material joining according to a fourth modification.
FIG. 25B is a sectional view of the dissimilar material welded joint for description of the arc welding method for dissimilar material joining according to the fourth modification.
FIG. 26A is a top view, a side view, and a bottom view of the joining assist member shown in FIG. 1A and FIG. 1B.
FIG. 26B is a top view, a side view, and a bottom view of a joining assist member according to an eighth modification.
FIG. 14C is a top view, a side view, and a bottom view of a joining assist member according to a ninth modification.

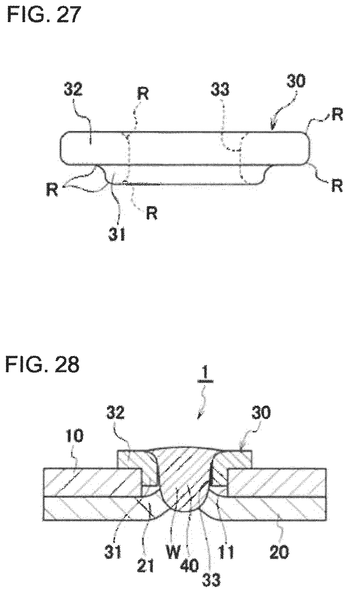

FIG. 27 is a side view of a joining assist member according to a 10th modification.
FIG. 28 is a sectional view for description of an arc welding method for dissimilar material joining and a dissimilar material welded joint according to a fifth modification.

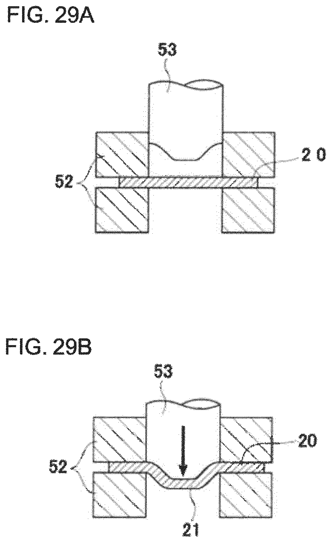

FIG. 29A shows a state before the swell portion is formed by drawing in the bottom plate shown in FIG. 28.
FIG. 29B shows a state after the swell portion is formed by drawing in the bottom plate shown in FIG. 28.
FIG. 30A is a perspective view showing an enclosed cross section structure to which the dissimilar material welded joint according to the embodiment is applied.
FIG. 30B is a perspective view showing an open cross section structure formed by an L-shaped plate and a flat plate to which the dissimilar material welded joint according to the embodiment is applied.
FIG. 30C is a perspective view showing an open cross section structure formed by two flat plates to which the dissimilar material welded joint according to the embodiment is applied.

### MODES FOR CARRYING OUT THE INVENTION

An arc welding method for dissimilar material joining, a joining assist member, and a dissimilar material welded joint according to an embodiment of the present invention are hereinafter described in detail with reference to the drawings.

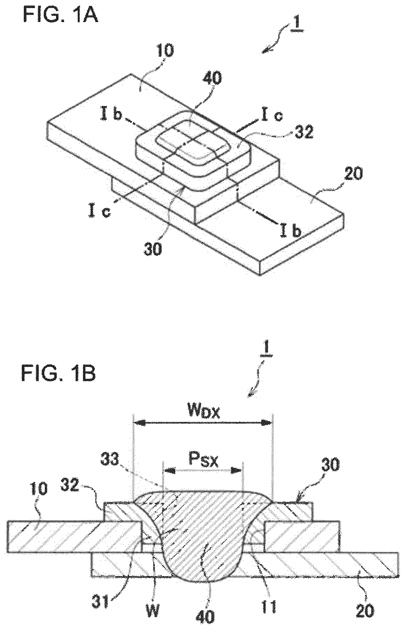

In the arc welding method for dissimilar material joining according to the embodiment, a dissimilar material welded joint 1 as shown in FIG. 1A to FIG. 1C is obtained by joining a top plate 10 (first plate) made of an aluminum alloy or a magnesium alloy and a bottom plate 20 (second plate) made of steel that are overlapped with each other, via a joining assist member 30 made of steel, by an arc welding method described later.

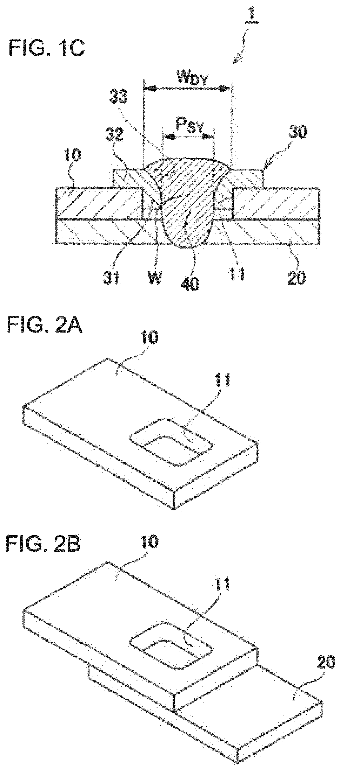

The top plate 10 has a hole 11 that reaches an overlapped surface to the bottom plate 20 to penetrate in the thickness direction, and the joining assist member 30 is inserted into the hole 11. As shown in FIG. 2A, the hole 11 is formed to have a non-circular shape having different longitudinal and lateral lengths.

The joining assist member 30 has a stepped external shape including an insertion portion 31 to be inserted into the hole 11 of the top plate 10 and a flange-shaped non-insertion portion 32 to be placed on the top surface of the top plate 10. A non-circular hollow portion 33 having different longitudinal and lateral lengths is formed through the joining assist member 30 so as to penetrate through the insertion portion 31 and the non-insertion portion 32.

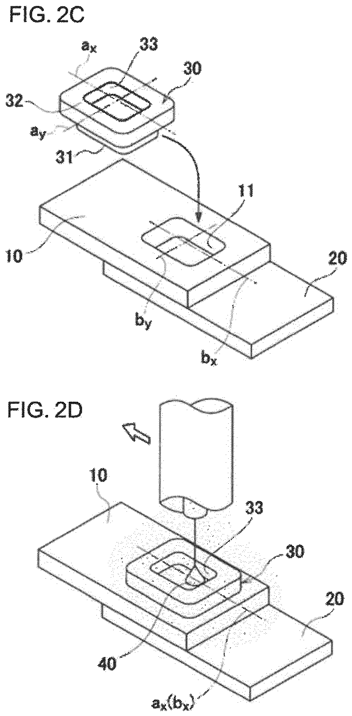

In the embodiment, the external shape of the insertion portion 31 is similar to the shape of the non-circular hollow portion 33 and is preferably similar to the shape of the hole 11 of the top plate 10. The joining assist member 30 is inserted in the top plate 10 in such a manner that the insertion portion 31 and the hollow portion 33 are concentric with the hole 11 of the top plate 10 and their longer-axis directions aₓ and bₓ (see FIG. 2C) coincide with each other.

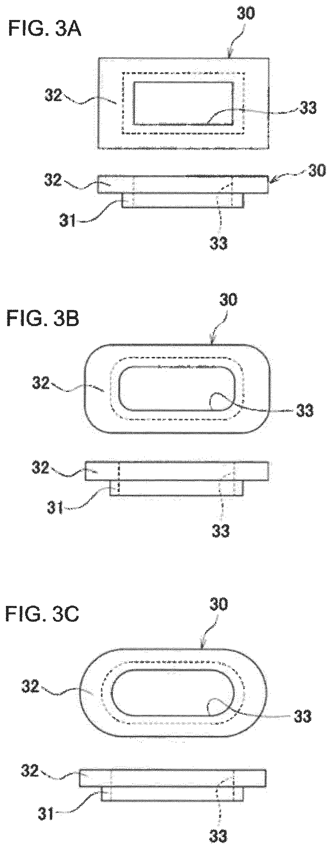

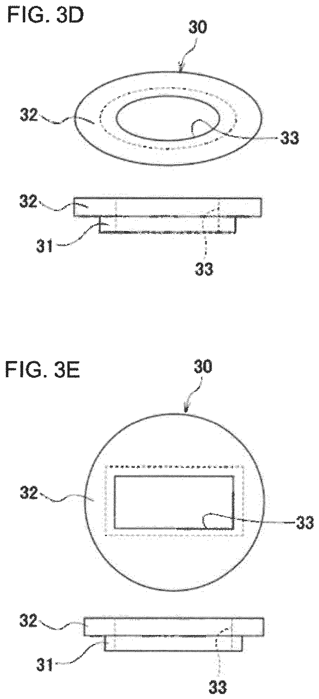

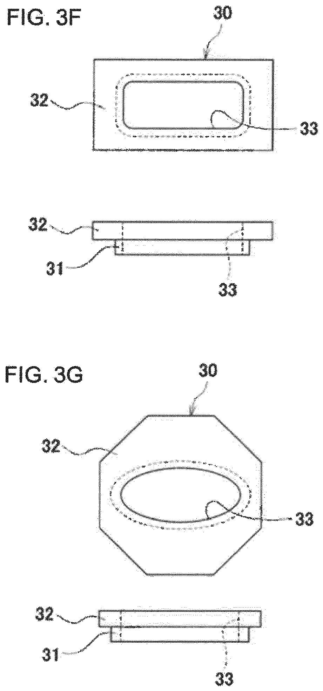

The external shape of the non-insertion portion 32 of the joining assist member 30 is not limited to a rectangle having round corners as shown in FIG. 2C and FIG. 3B, and may be any shape as long as the non-insertion portion 32 closes the hole 11 of the top plate 10 after welding. For example, the external shape of the non-insertion portion 32 may be a rectangle as shown in FIG. 3A and FIG. 3F, an elongated circle in which two circles are connected as shown in FIG. 3C, an ellipse as shown in FIG. 3D, a circle as shown in FIG. 3E, or a polygon as shown in FIG. 3G.

Likewise, the shape of the hollow portion 33 is not limited to a rectangle having round corners as shown in FIG. 2C, FIG. 3B, and FIG. 3F, and may be any shape. For example, the external shape of the hollow portion 33 may be a rectangle as shown in FIG. 3A and FIG. 3E, an elongated circle in which two circles are connected as shown in FIG. 3C, or an ellipse as shown in FIG. 3D and FIG. 3G.

Furthermore, the external shape of the non-insertion portion 32 of the joining assist member 30 may be either similar to the shapes of the insertion portion 31 and the hollow portion 33 as shown in FIG. 2A and FIG. 3A to FIG. 3D or not similar to the shapes of the insertion portion 31 and the hollow portion 33 as shown in FIG. 3E to FIG. 3G.

The hollow portion 33 of the joining assist member 30 is filled with a weld metal 40 of an iron alloy or an Ni alloy provided by melt of a filler material (welding material) by arc welding, and a melting portion W is formed of the weld metal 40 and a part of melted portions of the bottom plate 20 and the joining assist member 30. Thus, the melting portion W is placed in the hole 11 of the top plate 10 and serves to weld the joining assist member 30 and the bottom plate 20, whereby the top plate 10 and the bottom plate 20 are joined.

An arc welding method for dissimilar material joining for constructing the dissimilar material welded joint 1 will be described below with reference to FIG. 2A to FIG. 2D.

First, as shown in FIG. 2A, boring work for making a hole 11 through the top plate 10 is performed (step S1). Overlapping work of overlapping the top plate 10 and the bottom plate 20 with each other is then performed as shown in FIG. 2B (step S2). Then, as shown in FIG. 2C, the insertion portion 31 of the joining assist member 30 is inserted into the hole 11 of the top plate 10 from the top surface of the top plate 10 (step S3). Subsequently, as shown in FIG. 2D, the top plate 10 and the bottom plate 20 are joined to each other by performing any arc welding work of (a) a consumable-electrode gas-shielded arc welding method, (b) a non-gas arc welding method, (c) a gas tungsten arc welding method, (d) a plasma arc welding method, and (e) a coated arc welding method (step S4). FIG. 2D shows a case where arc welding work is performed by (a) the consumable-electrode gas-shielded arc welding method.

Specific examples of methods for the boring work of step S1 include a) punching with a punch, b) press punching using a die, and c) cutting using a laser or plasma or by a water jet method.

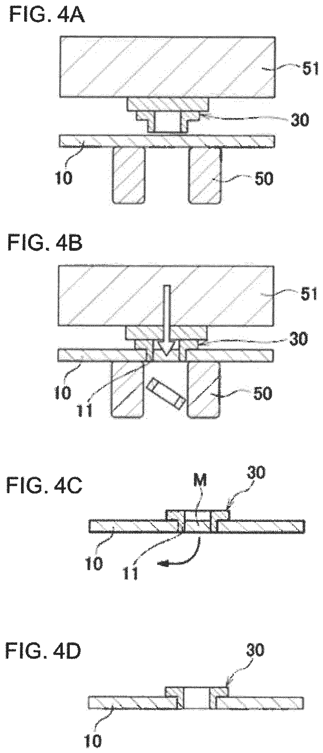

FIG. 4A to FIG. 4D show a special method in which an upper stage 51 on which the joining assist member 30 is fixed is brought close to a lower stage 50 on which the top plate 10 is mounted and punching is performed using the joining assist member 30 itself as a punch, whereby boring work of step S1 and joining assist member 30 insertion work of step S3 are performed at the same time. However, a base material piece M may remain in the hollow portion 33 and obstruct arc welding, though it is rare. It is therefore necessary to remove the base material piece M. This method is possible only when the height of the insertion portion 31 coincides with that of the top plate 10.

Thus, when this method is employed, the overlapping work of step S2 and the joining assist member 30 insertion work of step S3 are interchanged in order.

The arc welding work of step S4 is necessary to join the joining assist member 30 and the bottom plate 20 via a weld metal 40 in the hole 11 of the top plate 10 and fill the hollow portion 33 of the joining assist member 30. It is therefore indispensable for the arc welding to insert a filler material (welding material). More specifically, the weld metal 40 is formed by melting the filler material by the following four arc welding methods.
(a) The consumable-electrode gas-shielded arc welding method, which is a welding method commonly called MAG or MIG, is a method in which a good welded portion is formed by using a solid wire or a flux-containing wire as a filler/arc generation consumable electrode and shielding the welded portion from the air by a shielding gas such as CO₂, Ar, or He.
(b) The non-gas arc welding method, which is also called a self-shielded arc welding method, is a means for forming a good welded portion using a special flux-containing wire as a filler/arc generation consumable electrode while dispensing with a shielding gas.
(c) The gas tungsten arc welding method is one kind of gas-shielded arc welding method but is of a non-consumable-electrode type, and is commonly called TIG. An inert gas such as Ar or He is used as a shielding gas. An arc is generated between a tungsten electrode and a base material, and a filler wire is supplied to the arc from the side.
   Whereas in general no current is applied to the filler wire, there exists hot wire TIG in which the melting rate is increased by applying a current to the filler wire. In this case, no arc is generated from the filler wire.
(d) The plasma arc welding method, which is the same as the TIG in the principle, is a welding method in which the arc power is increased by tightening an arc by employing double gas supply systems and increasing the gas supply rate.
(e) The coated arc welding method is an arc welding method in which a coated arc welding rod in which a metal core wire is coated with flux is used as a filler. No shielding gas is necessary.

As for the filler material (welding material), common welding wires or welding rods can be employed as long as the weld metal 40 is an Fe alloy. An Ni alloy can also be used because it does not cause any problems in welding to iron.

More specifically, on the market are JIS standard materials such as (a) Z3312, Z3313, Z3317, Z3318, Z3321, Z3323, and Z3334, (b) Z3313, (c) Z3316, Z3321, and Z3334, and (d) Z3211, Z3221, Z3223, Z3224 and AWS (American Welding Society) standard materials such as (a) A5.9, A5.14, A5.18, A5.20, A5.22, A5.28, A5.29, and A5.34, (b) A5.20, (c) A5.9, A5.14, A5.18, and A5.28, and (d) A5.1, A5.4, A5.5, and A5.11.

The hollow portion 33 of the joining assist member 30 is filled with a filler material using these arc welding methods. The target position of the filler wire or welding rod is moved along the longer-axis direction aₓ of the hollow portion 33 of the joining assist member 30 as welding proceeds.

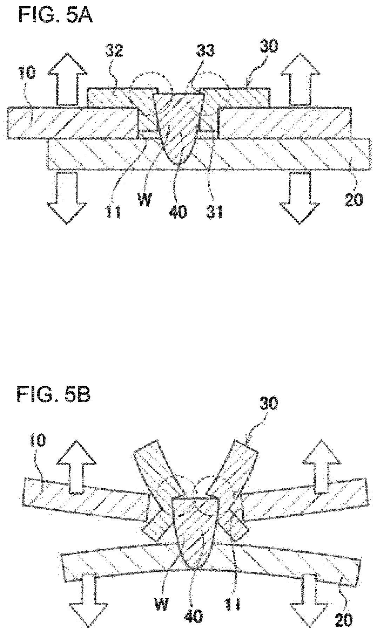

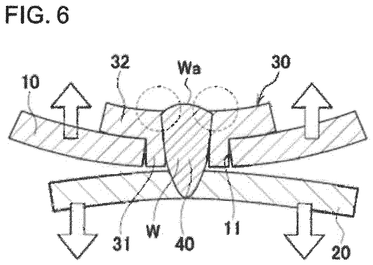

It is desirable that the hollow portion 33 of the joining assist member 30 is filled with the weld metal 40 and, furthermore, an excess weld metal Wa is formed on the surface of the joining assist member 30 (see FIG. 1B and FIG. 1C). If no excess weld metal is formed, that is, a part of the hollow portion 33 remains in appearance after welding as shown in FIG. 5A, the welding strength might be insufficient particularly for external stress in the thickness direction (three-dimensional direction) (see FIG. 5B). As shown in FIG. 6, formation of the excess weld metal Wa suppresses deformation of the joining assist member 30 and provides high joining strength when external stress is received in the thickness direction (three-dimensional direction).

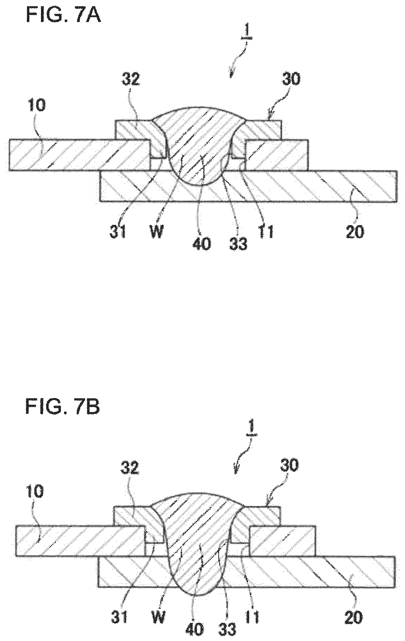

On the other hand, as for the weld penetration on the side opposite to the side of the excess weld metal, it is necessary that a part of the bottom plate 20 be melted to a proper extent as shown in FIG. 7A. There is no problem even if as shown in FIG. 7B the weld metal 40 is formed past the bottom surface of the bottom plate 20, that is, the bottom plate 20 is melted to such an extent that what is called a penetration bead is formed.

However, high strength cannot be obtained if no part of the bottom plate 20 is melted and the weld metal 40 is merely placed thereon. On the other hand, welding needs to be performed so that the weld metal 40 does not melt so deep that the weld metal 40 and the bottom plate 20 cause burn-through.

By the above steps of work, the top plate 10 made of an Al alloy or an Mg alloy and the bottom plate 20 made of steel are joined with high strength.

Roles of the steel joining assist member 30 that is used in the above-described arc welding method is described below.

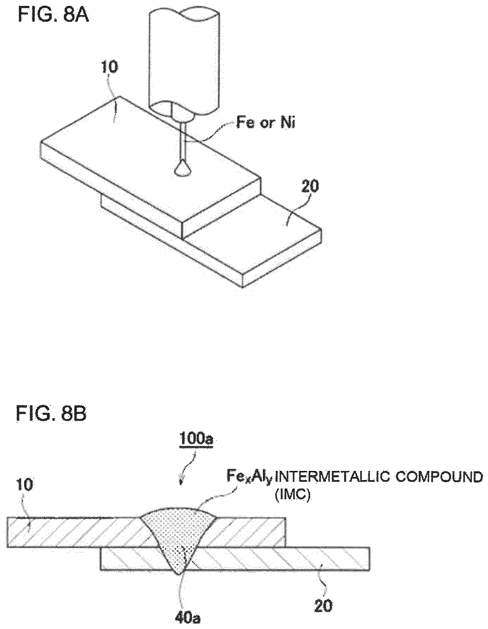

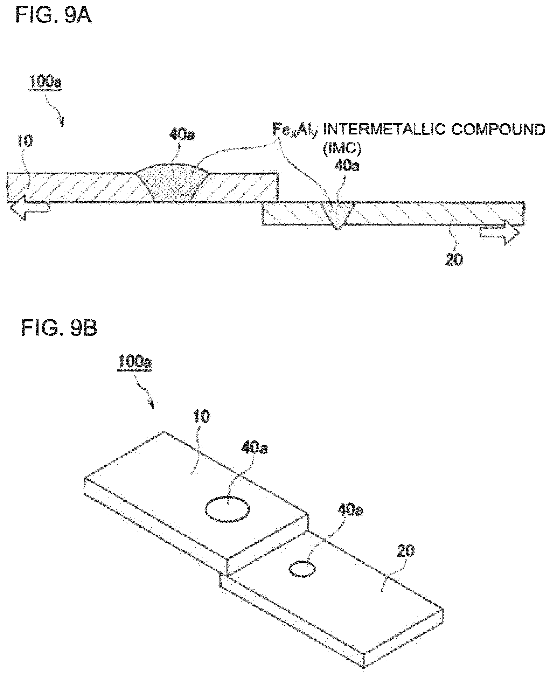

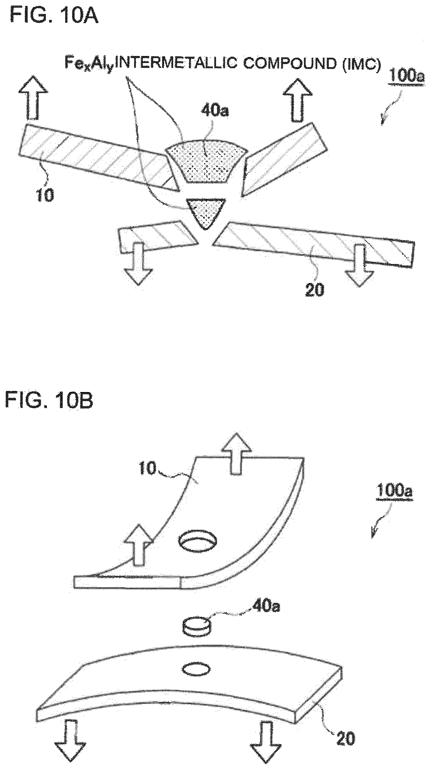

First, where as shown in FIG. 8A and FIG. 8B a top plate 10 made of aluminum is simply overlapped with a bottom plate 20 made of steel and arc spot welding is performed at a fixed point for a prescribed time from the top plate side using a welding wire made of steel or a nickel alloy, a weld metal 40a is formed that is an alloy of aluminum and steel or aluminum, steel, and nickel. Having a large aluminum content, this alloy is in the form of intermetallic compounds (IMCs) which are fragile. Although it appears that joining is made in such a dissimilar material welded joint 100a, the weld metal 40a is broken easily and disjoining occurs as shown in FIG. 9A and FIG. 9B when receiving tensile stress in a horizontal direction (shearing tension). Also when receiving tensile stress in the vertical direction (peeling tension), as shown in FIG. 10A and FIG. 10B the weld metal 40a is broken or the interface portion between the weld metal 40a and the top plate 10 or the interface portion between the weld metal 40a and the bottom plate 20 is broken and disjoining occurs like the top plate 10 comes off.

As described above, in the case where the top plate 10 made of aluminum and the bottom plate 20 made of steel are simply overlapped and they are subjected to penetration welding, the entire weld metal 40a becomes intermetallic compounds and hence is vulnerable to both shearing tension and peeling tension. As such, this dissimilar material welded joint is not suitable for practical use.

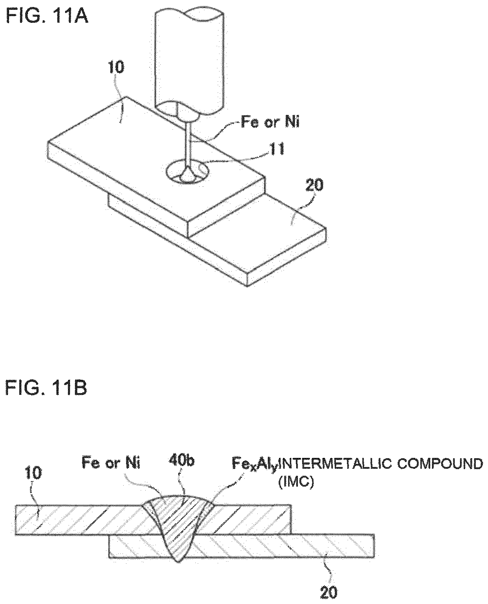

As shown in FIG. 11A and FIG. 11B, another method is conceivable in which a hole 11 having a proper size is made through a top plate 10 and a molten welding material made of steel or a nickel alloy is applied so as to fill up the hole 11.

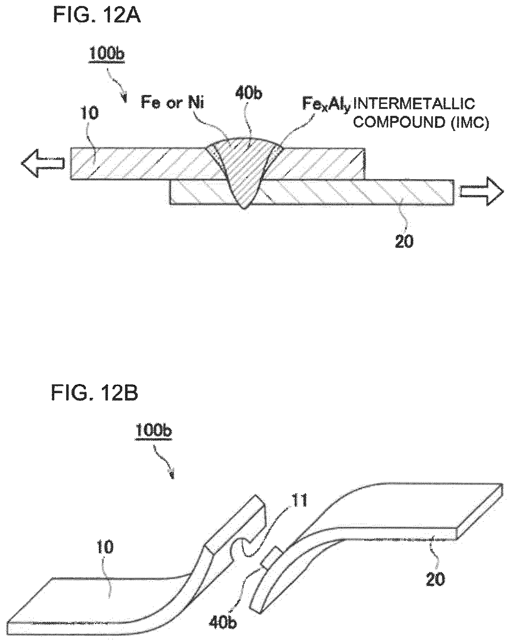

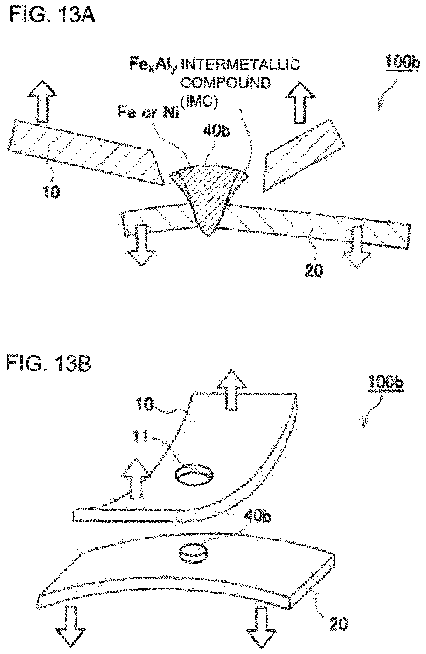

In this case, since a weld metal 40b formed of the welding material and steel that is the bottom plate 20 that are formed in an initial stage of welding do not contain molten aluminum, no intermetallic compounds are formed and the weld metal 40b is high in strength and toughness and is strongly connected to the bottom plate 20. Furthermore, a weld metal 40b formed inside the hole 11 of the top plate 10 contains very small amount of molten aluminum. Generation of intermetallic compounds much suppressed, and in particular, its central portion is robust. However, an intermetallic compound layer of aluminum and steel or aluminum and nickel is formed in the vicinity of the hole 11 of the top plate 10. When shearing tensile stress acts on such a dissimilar material welded joint 100b as shown in FIG. 12A, the bottom plate side withstands strong stress because of the strong metallic bonding. On the other hand, on the top plate side, although intermetallic compounds are formed around the hole 11, the base materials of the top plate 10 and the bottom plate 20 are deformed in an initial stage because they cannot be moved by peeling at the intermetallic compounds because of their shape. Thus, the deformation ability is higher than in the case of the dissimilar material welded joint 100a shown in FIG. 7A and FIG. 7B in which a brittle fracture occurs with almost no deformation. However, when the base materials are deformed further and the joining portion is inclined by close to 90°, as shown in FIG. 12B, the state as in the case of reception of vertical peeling stress is established. When this state occurs, the intermetallic compounds formed around the hole 11 peel off and the top plate 10 comes off easily from the joining portion. That is, the improvement is insufficient. As shown in FIG. 13A and FIG. 13B, the same result naturally occurs in a vertical tension test.

In view of the problems of the above two dissimilar material welded joints 100a and 100b, the joining assist member 30 according to the embodiment having the two-level structure is used to withstand tensile stress in the shearing direction and stress in the vertical peeling direction. More specifically, as shown in FIG. 2A to FIG. 2D, a hole is made through the top plate 10, the insertion portion 31 of the joining assist member 30 is inserted into the hole 11 formed in the top plate 10, and a weld metal 40 is formed by arc welding so as to fill the inside of the top plate 10 and the joining assist member 30. This produces a state where the joining assist member 30, the weld metal 40, and the bottom plate 20 are weld-joined by strong metallic bonding in a cross section. The most important role of the non-insertion portion 32 of the joining assist member 30 which is wider than the hole 11 of the top plate 10 is resistance to vertical peeling stress. As shown in FIG. 6, the use of the joining assist member 30 having a proper size can prevent a phenomenon that the top plate 10 is peeled off the weld metal 40 at their interface and thereby comes off. In general, the weld metal 40 fractures after sufficient plastic deformation. The joining assist member 30 does not affect initial stress adversely in response to tensile stress in the shearing direction. Furthermore, the joining assist member 30 prevents a phenomenon that the top plate 10 is peeled off the weld metal 40 at their interface and thereby comes off due to a peeling stress variation after the 90° inclination of the welding portion (see FIG. 12B) due to the deformation of base materials.

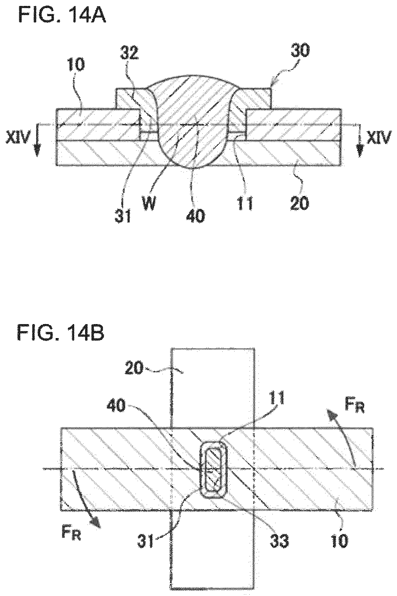

In the embodiment, the hollow portion 33 of the joining assist member 30 to be filled up with the weld metal 40 is formed to have a non-circular shape having a longer axis and a shorter axis. Whereas the joining assist member 30 is joined to the bottom plate 20, it is not joined to the top plate 10 by metallic bonding. However, as shown in FIG. 14A and FIG. 14B, the weld metal 40 that is inserted into the hole 11 of the top plate 10 in a molten state has a non-circular shape there. As a result, even if forces F_{R} act in a rotational direction in a plane, the bottom plate 20 and the joining assist member 30 can be prevented from rotating relative to the top plate 10.

As described later in detail, the joining assist member 30 becomes stronger against external stress in the thickness direction (three-dimensional direction) as its area and thickness P_{H} increase, and it is thus desirable. However, the joining assist member 30 being unduly large is a factor in increasing the weight and means too long a projection from the surface of the top plate 10, which would deteriorate the aesthetic appearance or cause interference with other, nearby members. Thus, the size of the joining assist member 30 should be determined so as to satisfy design requirements.

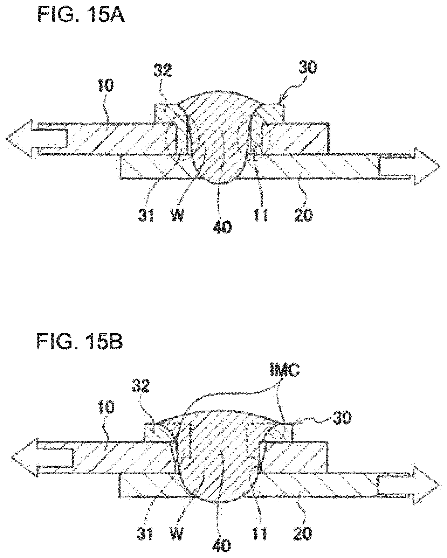

Furthermore, the joining assist member 30 provides protective wall action for preventing melt of Al alloy or Mg alloy. This action is mainly provided by the insertion portion 31 of the joining assist member 30. Al alloy or Mg alloy in the joining portion is most likely to melt on the inner surface of the hole 11 and a surface portion around the inner surface. By covering these surfaces with the joining assist member 30, propagation of heat of arc welding directly to the Al alloy or Mg alloy is prevented and mixing with steel to form intermetallic compounds (IMCs) is prevented. Since the weld penetration range of the arc welding is restricted to within the joining assist member 30 and the bottom plate 20, there occurs no dilution of the weld metal 40 with Al or Mg and hence formation of IMCs can be prevented completely. Thus, as shown in FIG. 15A, the insertion portion 31 provides resistance to external stress in the width direction (two-dimensional directions).

On the other hand, in the embodiment, it is not necessary to prevent formation of IMCs completely, that is, formation of a small number of IMCs is allowable. This is because even if IMCs are formed on the inner surface of the hole 11 as shown in FIG. 15B, if the weld metal 40 is ductile and has proper strength, it provides resistance to external stress in the width direction (two-dimensional directions) and hence the influence of an IMC layer formed around the weld metal 40 is small. Although the IMCs are fragile, even if tensile stress acts on them as a structural body, both compressional stress and tensile stress act on the joining portion at the same time and the IMCs are kept sufficiently strong against compressional force. For these reasons, the IMC layer formation does not cause propagation of destruction. Thus, the insertion portion 31 of the joining assist member 30 need not always be the same in thickness as the top plate 10.

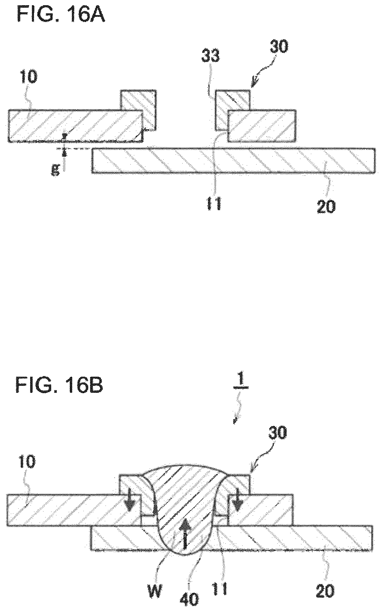

The joining assist member 30 plays a role of minimizing a gap g (see FIG. 16A) that occurs between the overlapped surfaces when the top plate 10 made of an Al alloy or an Mg alloy is overlapped with the bottom plate 20 made of steel. In the arc welding step, the weld metal 40 experiences thermal contraction and, during that course, force causing the bottom plate 20 and the joining assist member 30 to come closer to each other acts on them. By virtue of this force, even if a small gap g exists before the welding, the gap g after the welding is smaller (see FIG. 16B), which means increase in the design accuracy of the joining portion.

Furthermore, the joining assist member 30 plays a role of assisting the positioning. The joining assist member 30 is inserted into the hole 11 of the top plate 10 with an expectation that the above-described dynamic effects are obtained. In addition to the above-described effect of preventing melt of the top plate 10, the insertion portion 31 of the joining assist member 30 has a role of providing an index for allowing the joining assist member 30 to be set while determining its insertion position reliably. Without the insertion portion 31, there is no reference for setting the joining assist member 30 so as to be concentric with the hole 11. If arc welding is performed with the joining assist member 30 set at a position that is deviated from the hole 11, integral joining of the joining assist member 30, the weld metal 40, and the bottom plate 20 would be incomplete. Or, even worse, the weld metal 40 might melt the top plate 10 which is made of an Al alloy or an Mg alloy and turn into IMCs and become fragile, resulting in a very weak joint connection force.

For the above-described reasons, the joining assist member 30 is used which is made of steel, has a stepped external shape including the insertion portion 31 and the non-insertion portion 32, and has the non-circular hollow portion 33 having different longitudinal and lateral lengths formed to penetrate through the insertion portion 31 and the non-insertion portion 32.

There are no particular limitations on the specific material of the steel joining assist member 30 except that it should be pure iron or an iron alloy. Specific examples include soft steel, carbon steel, and stainless steel.

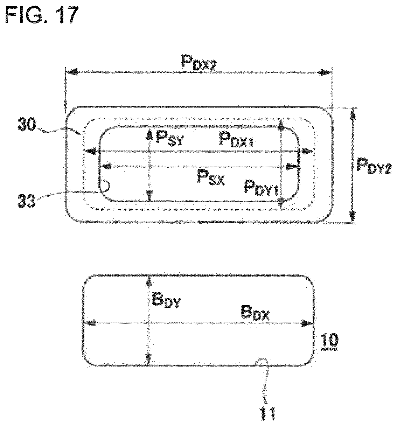

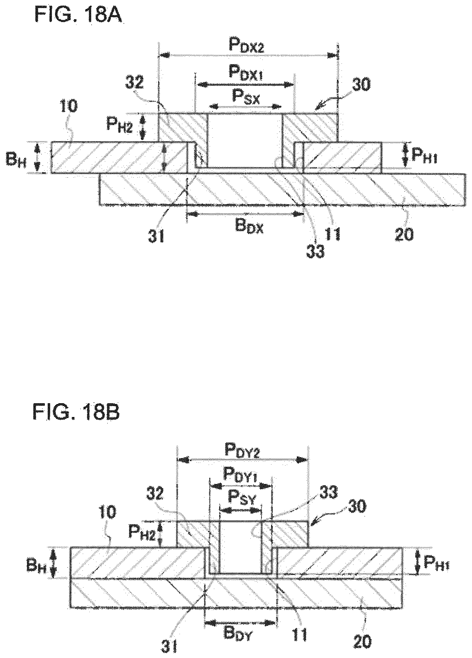

As shown in FIG. 17 to FIG. 18B, various dimensions of the joining assist member 30 are set in the following manners with respect to the top plate 10.

### Insertion portion height P_{H1}

The insertion portion height P_{H1} is designed to be 10% or larger and 100% or smaller of the thickness B_{H} of the top plate 10. The insertion portion 31 of the joining assist member 30 provides the above-described effect of reducing the melt amount of the Al or Mg top plate 10 during the welding step and the positioning assist effect. The degree of propagation of arc heat to the top plate 10 lowers as the insertion portion height P_{H1} increases and hence the former effect is enhanced, and it is thus desirable. However, the insertion portion height P_{H1} being greater than the thickness B_{H} of the top plate 10 is not desirable because a gap is formed between the top plate 10 and the bottom plate 20. Thus, the upper limit of the insertion portion height P_{H1} is 100% of the thickness B_{H}. On the other hand, if the insertion portion height P_{H1} is smaller than 10% of the thickness B_{H} of the top plate 10, the former effect cannot be obtained and the weld metal 40 becomes too brittle due to melt of the top plate 10. The latter effect cannot be obtained either. Thus, the lower limit of the insertion portion height P_{H1} is 10% of the thickness B_{H} of the top plate 10.

### Longer-axis length P_{DX1} and shorter-axis length P_{DY1} of insertion portion

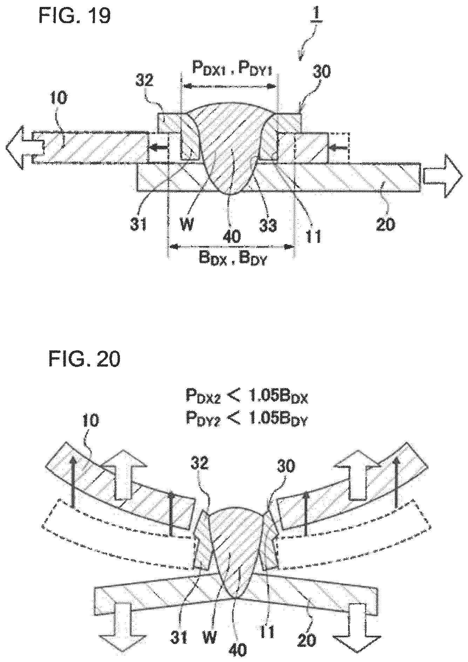

The longer-axis length P_{DX1} of the insertion portion 31 is designed to be 80% or larger and 105% or smaller of the longer-axis length B_{DX} of the hole 11 of the top plate 10. The shorter-axis length P_{DY1} of the insertion portion 31 is designed to be 80% or larger and 105% or smaller of the shorter-axis length B_{DY} of the hole 11 of the top plate 10. As for the resistance force against movement of the top plate 10 in the horizontal direction (two-dimensional directions), although thermal contraction force resulting from welding of the joining assist member 30 and the bottom plate 20 exercises auxiliary action, physical contact between the wall surface of the hole 11 of the top plate 10 and the insertion portion 31 of the joining assist member 30 plays a main role. For the latter resistance force, a state where no gap exists between the insertion portion 31 of the joining assist member 30 and the hole 11 of the top plate 10 is the best. Thus, it is ideal that the longer-axis length P_{DX1} of the insertion portion 31 and the shorter-axis length P_{DY1} of the insertion portion 31 are the same as (i.e., 100% of) the longer-axis length B_{DX} and the shorter-axis length B_{DY} of the hole 11, respectively. However, the individual lengths of the insertion portion 31 of the joining assist member 30 being a little greater raises no problem because the insertion portion 31 can be pushed in the hole 11 of the top plate 10, forcibly utilizing elastic deformation of a portion around the hole 11. The practical upper limits of the lengths P_{DX1} and P_{DY1} of the insertion portion 31 are 105% of the respective lengths B_{DX} and B_{DY} of the hole 11. On the other hand, presence of a gap is not desirable because deviation occurs easily when a horizontal force is received (see FIG. 19). But a strong resistance force is provided due to contact between the two portions after movement of a distance corresponding to the gap. As described later, in the case where the welding method according to the embodiment is applied to plural locations that are close to each other, gaps at the respective welding portions are seldom in the same direction. In terms of the probability theory, the gap directions are dispersed more as the number of welding portions increases. There is a welding portion providing resistance force against tensile stress in any particular direction and hence deviation does not occur easily. It is therefore concluded that in general a certain gap is allowable depending on the design accuracy. The lower limits of the lengths P_{DX1} and P_{DY1} of the insertion portion 31 are set at 80% of the respective lengths B_{DX} and B_{DY} of the hole 11. However, from the viewpoint of accuracy, it is even more preferable that the lower limits be 90%.

### Longer-axis length P_{DX2} and shorter-axis length P_{DY2} of non-insertion portion

The longer-axis length P_{DX2} of the non-insertion portion 32 is designed to be 105% or larger of the longer-axis length B_{DX} of the hole 11 of the top plate 10. The shorter-axis length P_{DY2} of the non-insertion portion 32 is designed to be 105% or larger of the shorter-axis length B_{DY} of the hole 11 of the top plate 10. As described above, the joining assist member 30 dominantly plays a role of providing resistance force when external stress in the thickness direction, that is, peeling stress, is received. In particular, the non-insertion portion 32 makes a large contribution in playing that role. The joining assist member 30 becomes stronger with respect to external stress in the thickness direction (three-dimensional direction) as the longer-axis length P_{DX2} and the shorter-axis length P_{DY2} and the thickness of the non-insertion portion 32 increase, and it is thus desirable. As shown in FIG. 20, in the case where the longer-axis length P_{DX2} and the shorter-axis length P_{DY2} of the non-insertion portion 32 are smaller than 105% of the longer-axis length B_{DX} and the shorter-axis length B_{DY} of the hole 11, respectively, when the joining assist member 30 is deformed elasto-plastically by external stress in the thickness direction, its apparent dimensions are very prone to become smaller than or equal to the corresponding dimensions of the hole 11 of the top plate 10, in which case the top plate 10 is prone to come off. That is, the joining assist member 30 does not provide a strong resistance force. Thus, the lower limits of the longer-axis length P_{DX2} and the shorter-axis length P_{DY2} of the non-insertion portion 32 are set at 105% of the longer-axis length B_{DX} and the shorter-axis length B_{DY} of the hole 11, respectively. It is more preferable that the lower limits of the longer-axis length P_{DX2} and the shorter-axis length P_{DY2} of the non-insertion portion 32 be set at 120% of the longer-axis length B_{DX} and the shorter-axis length B_{DY} of the hole 11. On the other hand, from the viewpoint of the strength of the joining portion, it is not necessary to set the upper limits.

### Non-insertion portion thickness P_{H2}

The thickness P_{H2} of the non-insertion portion 32 is designed to be 50% or larger and 150% or smaller of the thickness B_{H} of the top plate 10. As described above, the joining assist member 30 becomes stronger with respect to external stress in the thickness direction (three-dimensional direction) as its external dimensions and thickness P_{H2} increase, and it is thus desirable. A stronger resistance force can be obtained by increasing the thickness P_{H2} of the non-insertion portion 32 according to the thickness B_{H} of the top plate 10 of the joint. In the case where the thickness P_{H2} of the non-insertion portion 32 is smaller than 50% of the thickness B_{H} of the top plate 10, the non-insertion portion 32 of the joining assist member 30 is easily deformed elasto-plastically by external stress in the thickness direction. If the visible dimensions of the non-insertion portion 32 become smaller than or equal to the corresponding dimensions of the hole 11 of the top plate 10, coming-off is prone to occur. That is, the joining assist member 30 does not produce a strong resistance force. Thus, the lower limit of the thickness P_{H2} of the non-insertion portion 32 is set at 50% of the thickness B_{H} of the top plate 10. On the other hand, in the case where the thickness P_{H2} of the non-insertion portion 32 is larger than 150% of the thickness B_{H} of the top plate 10, not only is the appearance poor because of excessive projection of the non-insertion portion 32 but also the weight is too heavy, though the joint has no problem of insufficient strength. It is therefore necessary to set the thickness P_{H2} of the non-insertion portion 32 to 150% or smaller of the thickness B_{H} of the top plate 10.

As shown in FIG. 1B and FIG. 1C, the longer-axis length W_{DX} and the shorter-axis length W_{DY} of the excess weld metal Wa that is formed on the surface of the joining assist member 30 in the filling and welding step by arc is set 105% or larger of the longer-axis length P_{SX} and the shorter-axis length P_{SY} of the hollow portion 33 of the joining assist member 30, respectively.

Although as described above the joining assist member 30 has a role of providing resistance force against external stress in the thickness direction (three-dimensional direction), a strong resistance force cannot be provided unless the hollow portion 33 is filled up completely. If the hollow portion 33 is not filled up completely and part of the inner surface of the hollow portion 33 is left exposed, coming-off may occur easily because of an insufficient connection area of the joining assist member 30 and the weld metal 40. To increase the connection area of the joining assist member 30 and the weld metal 40, it is desired to fill up the hollow portion 33 completely and form an excess weld metal Wa. In the case where the excess weld metal Wa is formed, its longer-axis length W_{DX} and shorter-axis length W_{DY} should be larger than the longer-axis length P_{SX} and the shorter-axis length P_{SY} of the hollow portion 33 of the joining assist member 30, respectively. The lower limits of the longer-axis length W_{DX} and the shorter-axis length W_{DY} of the excess weld metal Wa are set 105% or larger of the longer-axis length P_{SX} and the shorter-axis length P_{SY} of the hollow portion 33 of the joining assist member 30, respectively, because it means that the excess weld metal Wa has been formed surely.

Although it is not always necessary to restrict the thickness of the top plate 10 or the bottom plate 20, it is desirable to set the thickness of the top plate 10 to be 4.0 mm or smaller when the working efficiency and the overlapping welding shape are taken into consideration. On the other hand, it is desirable that the thickness of both the top plate 10 and the bottom plate 20 be 0.5 mm or larger because, considering the heat input of the arc welding, an unduly small thickness causes burn-through and thereby makes the welding difficult.

With the above measures, the top plate 10 made of an aluminum alloy or a magnesium alloy and the bottom plate 20 made of steel can be joined strongly.

It is known that the direct joining of different kinds of metals is associated with a problem other than the formation of IMCs. That is, when different kinds of metals are brought into contact with each other, a galvanic cell is formed, which is a cause of accelerating corrosion. Corrosion caused by this phenomenon (anode reaction in the cell) is called electric corrosion. Corrosion is accelerated if water exists in an interface where different kinds of metals are in contact with each other. Thus, where the embodiment is applied to a joining location into which water is prone to intrude, it is necessary to subject the joining location to sealing treatment for preventing intrusion of water to prevent electric corrosion. Also in this joining method, since there are plural interfaces where an Al alloy or Mg alloy comes into contact with steel, it is preferable to use a resin-based adhesive not only for further increase of joint strength but also as a sealing material.

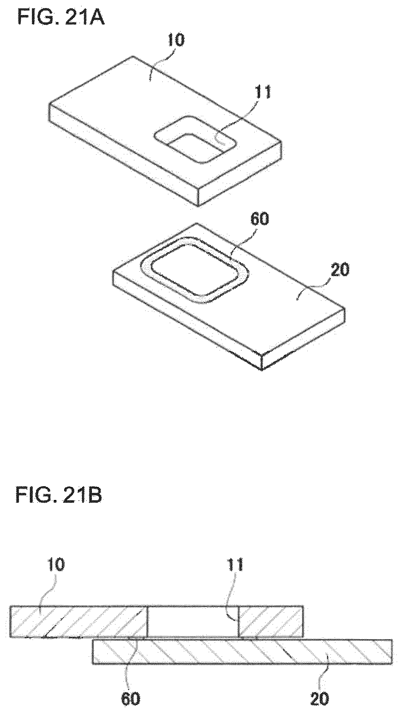

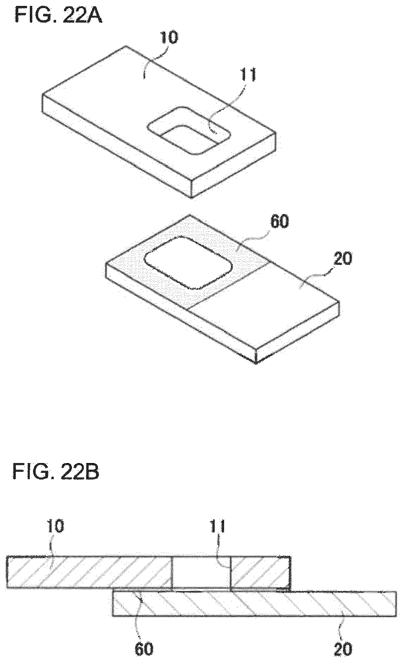

For example, as in a first modification shown in FIG. 21A and FIG. 21B, adhesive 60 may be applied in a ring-like shape around a welding portion over entire circumference between the joining surfaces of the top plate 10 and the bottom plate 20. As in the second modification shown in FIG. 22A and FIG. 22B, another method for applying adhesive 60 around a welding portion over entire circumference between joining surfaces of the top plate 10 and the bottom plate 20 includes a method in which adhesive 60 is applied in the entire area excluding the welding portion. This makes it possible to lower the electric corrosion rates of the top plate 10, the bottom plate 20, and the weld metal 40.

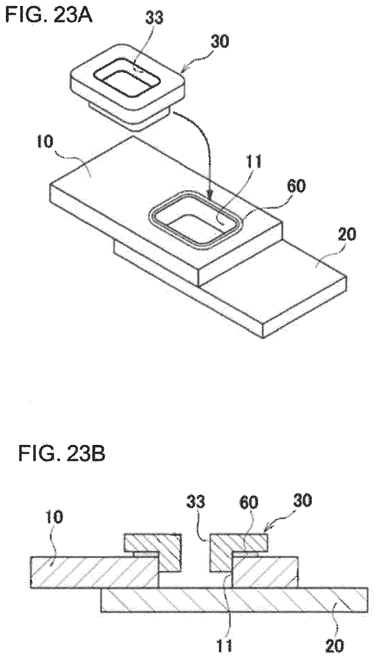

As in a third modification shown in FIG. 23A and 23B, adhesive 60 may be applied between a portion around the hole 11 of the top plate 10 and the bottom surface of the joining assist member 30. This makes it possible to lower the electric corrosion rates of the top plate 10, the joining assist member 30, and the weld metal 40.

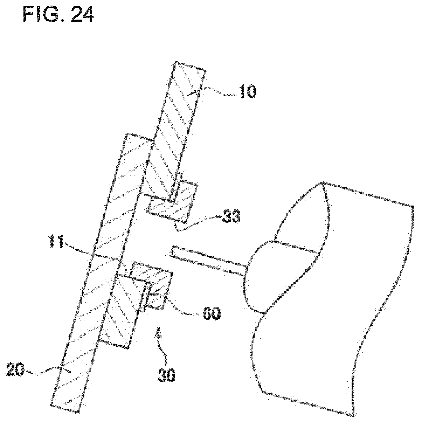

In this case, an auxiliary effect is obtained that the joining assist member 30 is tentatively fixed to the top plate 10 before arc welding. In particular, where as shown in FIG. 24, arc welding is performed in a horizontal or upward-directed posture, applying adhesive 60 in advance makes it possible to prevent the joining assist member 30 from coming off due to gravity and thereby perform welding properly.

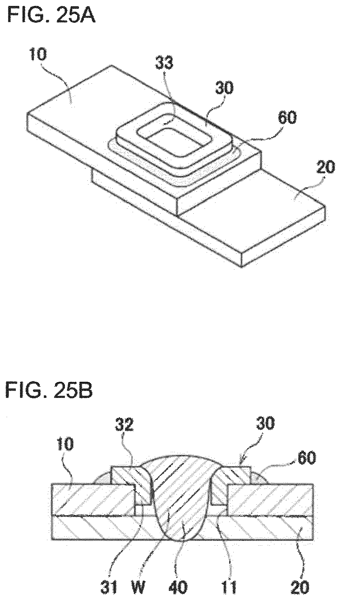

As in a fourth modification shown in FIG. 25A and 25B, adhesive 60 may be applied to the boundary between the joining assist member 30 and the surface of the top plate 10. This provides, in addition to the effect of lowering the electric corrosion rates, an effect that the joining assist member 30 is tentatively fixed to the top plate 10 if the adhesive 60 is applied before the arc welding. Whereas in the third modification shown in FIG. 23A and FIG. 23B the application can be made only before the welding step, in the fourth modification shown in FIG. 25A and FIG. 25B the application can be made either before or after the welding step.

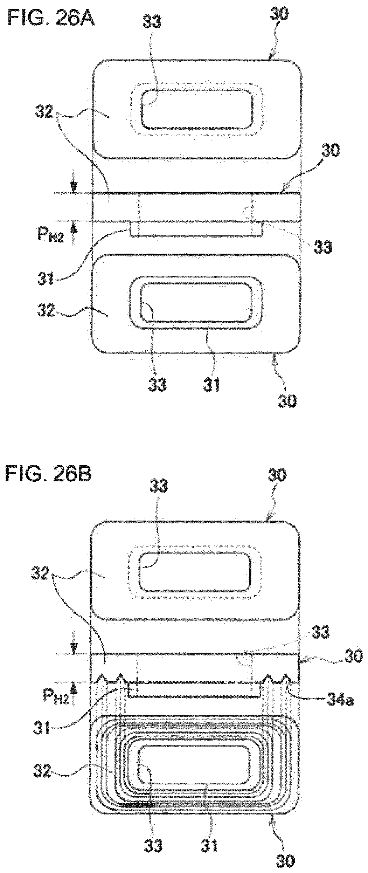

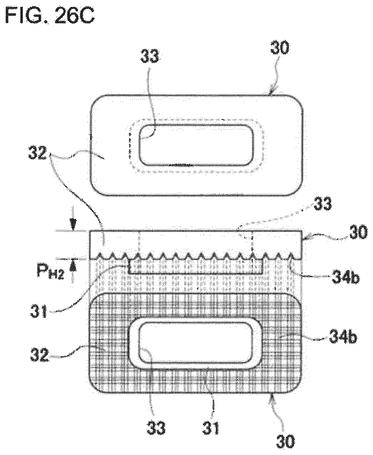

The surface of the joining assist member 30 to come into contact with the top plate 10, need not always be a flat surface as shown in FIG. 26A. That is, as shown in FIG. 26B and FIG. 26C, when necessary, the surface of the joining assist member 30 to come into contact with the top plate 10 may have slits 34a or 34b. In particular, where the surface to come into contact with the top plate 10 has circumferential slits 34a, grid-like slits 34b, or radial slits (not shown), applied adhesive 60 goes into the slits 34a or 34b and does not escape, whereby stable adhesion is attained and a reliable sealing effect is obtained. In the case of having such a non-flat surface, a portion having the largest height is defined as the thickness P_{H2} of the joining assist member 30.

Rounding the sides of the joining assist member 30 as shown in FIG. 27 because of safety during use, limitations relating to forging, and other reasons poses no problem. In particular, widening a top edge surface of the hollow portion 33 into a conical shape provides advantages of increasing the fitting ease of the weld metal 40 and the joining assist member 30 and improving the appearance.

Furthermore, as in a fifth modification shown in FIG. 28, the bottom plate 20 may have a swell portion 21.

In the case where the top plate 10 made of an Al alloy or an Mg alloy is relatively thin, welding can be performed satisfactorily by not working the bottom plate 20 at all and merely making a hole 11 through the top plate 10 and inserting the joining assist member 30 into the hole 11 in during the joining. However, in the case where the top plate 10 is thick, it takes a long time to fill up the hollow portion 33 of the joining assist member 30 in the welding step, which means low efficiency. Furthermore, because of the great amount of heat, part of the bottom plate 20 made of steel easily causes burn-through before filling-up of the hollow portion 33. If the swell portion 21 is formed by drawing in the bottom plate 20, the volume of the hole 11 is reduced, whereby a burn-through failure while the hollow portion 33 is being filled up is prevented.

In addition, in the fifth modification, the swell portion 21 of the bottom plate 20 can be used as a mark when the top plate 10 and the bottom plate 20 are positioned with respect to each other. As a result, the swell portion 21 of the bottom plate 20 and the hole 11 of the top plate 10 can easily be positioned with respect to each other and the efficiency of the overlapping work can be increased.

As shown in FIG. 29A, the swell portion 21 of the bottom plate 20 is formed by drawing while restraining the peripheral portion around the portion where the swell portion 21 is to be formed, by dies 52. The swell portion 21 is formed by pushing a punch 53 by applying pressure to a portion where the swell portion 21 is to be formed as shown in FIG. 29B. It is desirable that a tip portion of the punch be similar in shape to the hole 11 of the top plate 10.

Since the welding method of this embodiment can be called spot welding where there is a small joining area, in the case of joining overlapped portions J of materials of actual use having a relatively large joining area, this welding method may be employed at plural positions as shown in FIG. 30A to FIG. 30C. With this measure, strong joining can be attained in the overlapped portions J. Whereas the embodiment can be used for open cross section structures as exemplified in FIG. 30B and FIG. 30C, it can be used particularly suitably for enclosed cross section structures as exemplified in FIG. 30A.

As described above, the arc welding method for dissimilar material joining according to the embodiment includes a step of making a non-circular hole 11 having different longitudinal and lateral lengths through a top plate 10; a step of overlapping the top plate 10 and a bottom plate 20; a step of inserting a joining assist member 30 made of steel into the hole 11 formed in the top plate 10, the joining assist member 30 having a stepped external shape including an insertion portion 31 and a non-insertion portion 32 and having a non-circular hollow portion 33 having different longitudinal and lateral lengths formed to penetrate through the insertion portion 31 and the non-insertion portion 32; a step of filling the hollow portion 33 of the joining assist member 30 with a weld metal 40 and welding the bottom plate 20 and the joining assist member 30 by any method of the following (a) to (e).
(a) A gas-shielded arc welding method using, as a consumable electrode, a welding wire to provide the weld metal 40 made of an iron alloy or an Ni alloy;
(b) a non-gas arc welding method using the above welding wire as a consumable electrode;
(c) a gas tungsten arc welding method using the above welding wire as a non-consumable electrode filler;
(d) a plasma arc welding method using the above welding wire as a non-consumable electrode filler; and
(e) a coated arc welding method using, as a consumable electrode, a coated arc welding rod to provide the weld metal 40 made of an iron alloy or an Ni alloy.

These methods make it possible to join the top plate 10 made of an Al alloy or an Mg alloy and the bottom plate 20 made of steel using an inexpensive arc welding facility with high quality including high strength and reliability, and can be applied to both of an open cross section structure and an enclosed cross section structure with no limitations.

The bottom plate 20 has a swell portion 21 formed by drawing and the swell portion 21 of the bottom plate 20 is placed in the hole 11 of the top plate 10 in the overlapping step. Even where the top plate 10 is thick, this measure makes it possible to prevent a burn-through failure while performing welding and to position the top plate 10 and the bottom plate 20 with respect to each other.

The above method further includes, before the overlapping step, a step of applying an adhesive 60 to at least one of overlapped surfaces of the top plate 10 and the bottom plate 20 around the hole 11 over its entire circumference. With this measure, the adhesive 60 not only increases the strength of the joint but also serves as a sealing material and can thereby lower the corrosion rates of the top plate 10, the bottom plate 20 and the weld metal 40.

In the placing step, an adhesive 60 is applied to at least one of confronting surfaces between the joining assist member 30 and the top plate 10 opposed to the joining assist member 30. With this measure, the corrosion rates of the top plate 10, the joining assist member 30, and the weld metal 40 can be lowered.

In the placing step or after the filling and welding step, an adhesive 60 is applied to a boundary between the joining assist member 30 and a surface of the top plate 10. With this measure, the joining strength of the top plate 10 and the joining assist member 30 can be increased. Applying the adhesive 60 in the inserting step can provide an effect of fixing the joining assist member 30 tentatively.

The height P_{H1} of the insertion portion 31 of the joining assist member 30 is 10% or larger and 100% or smaller of the thickness B_{H} of the top plate 10. This makes it possible to decrease the melt amount of the top plate 10 during the welding step and to assist positioning of the joining assist member 30.

The longer-axis length P_{DX1} of the insertion portion 31 of the joining assist member 30 is 80% or larger and 105% or smaller of the longer-axis length B_{DX} of the hole 11 of the top plate 10. This makes it possible to suppress formation of intermetallic compounds in the weld metal 40 and to prevent positional deviation due to shearing stress and separation of the top plate 10 due to vertical peeling stress.

The shorter-axis length P_{DY1} of the insertion portion 31 of the joining assist member 30 is 80% or larger and 105% or smaller of the shorter-axis length B_{DY} of the hole 11 of the top plate 10. This makes it possible to suppress formation of intermetallic compounds in the weld metal 40 and to prevent positional deviation due to shearing stress and separation of the top plate 10 due to vertical peeling stress.

The longer-axis length P_{DX2} of the non-insertion portion 32 of the joining assist member 30 is 105% or larger of the longer-axis length B_{DX} of the hole 11 of the top plate 10. This allows the joining assist member 30 to function to provide resistance force against external stress in the thickness direction.

The shorter-axis length P_{DY2} of the non-insertion portion 32 of the joining assist member 30 is 105% or larger of the shorter-axis length B_{DY} of the hole 11 of the top plate 10. This allows the joining assist member 30 to function to provide resistance force against external stress in the thickness direction.

The thickness P_{H2} of the non-insertion portion 32 of the joining assist member 30 is 50% or larger and 150% or smaller of the thickness B_{H} of the top plate 10. This allows the joining assist member 30 to function to provide resistance force against external stress in the thickness direction while taking appearance and weight increase into consideration.

In the filling and welding step, an excess weld metal Wa is formed on a surface of the joining assist member, and the longer-axis length W_{DX} of the excess weld metal Wa is 105% or larger of the longer-axis length P_{SX} of the hollow portion 33 of the joining assist member 30. This allows the excess weld metal Wa to function to provide resistance force against external stress in the thickness direction.

In the filling and welding step, an excess weld metal Wa is formed on a surface of the joining assist member, and the shorter-axis length W_{DY} of the excess weld metal Wa is 105% or larger of the shorter-axis length P_{SY} of the hollow portion 33 of the joining assist member 30. This allows the excess weld metal Wa to function to provide resistance force against external stress in the thickness direction.

The joining assist member 30 according to the embodiment is made of steel, has a stepped external shape including an insertion portion 31 and a non-insertion portion32, and has a non-circular hollow portion 33 having different longitudinal and lateral lengths formed to penetrate through the insertion portion 31 and the non-insertion portion 32. Configured in this manner, the joining assist member 30 can be used suitably for the above-described arc welding method for dissimilar material joining.

The dissimilar material welded joint 1 according to the embodiment includes a top plate 10 made of an aluminum alloy or a magnesium alloy and a bottom plate 20 made of steel and arc-welded to the top plate 10, wherein the top plate 10 has a non-circular hole 11 having different longitudinal and lateral lengths that reaches an overlapped surface to the bottom plate 20, wherein the dissimilar material welded joint 1 further includes a joining assist member 30 made of steel, the joining assist member 30 having a stepped external shape including an insertion portion 31 inserted in the hole 11 formed in the top plate 10 and a non-insertion portion 32, and having a non-circular hollow portion 33 having different longitudinal and lateral lengths formed to penetrate through the insertion portion 31 and the non-insertion portion 32, and wherein the hollow portion 33 of the joining assist member 30 is filled with a weld metal 40 made of an iron alloy or an Ni alloy, and a melting portion W is formed of the weld metal 40 and a part of melted portions of the bottom plate 20 and the joining assist member 30.

This dissimilar material welded joint 1 having the top plate 10 made of an Al alloy or an Mg alloy and the bottom plate 20 made of steel is joined using an inexpensive arc welding facility, with good joining quality high in strength and reliability, and can be applied to both an open cross section structure and an enclosed cross section structure with no limitations.

The invention is not limited to the above-described embodiment and Examples and various modifications, improvements, etc. are possible as appropriate.

### Examples

The effectiveness of the embodiment was confirmed using Examples A to E described below.

### <Examples A>

In Examples A, a lap joint was used having a combination of a 1.6 mm-thick top plate 10 made of an aluminum alloy A5083 and a 1.4 mm-thick bottom plate 20 made of 590 MPa-class high tensile strength steel. This lap joint was joined by arc welding by a MAG welding method using, as a shielding gas, a mixed gas of 80% Ar and 20% CO₂ while moving a 1.2 mm-diameter JIS Z3312 G78A4MN5CM3T steel welding wire.

This welded joint 1 was subjected to breaking tests according to JIS Z3136 "Test piece dimensions and test method of shearing test of resistance spot and projection welded joint" and JIS Z3137 "Cross tension test for resistance spot and projection welded joint." The longer axis of the hole 11 of the top plate 10 and the longer axis of the hollow portion 33 of the joining assist member 30 were set so as to be directed to the shorter side of the rectangular top plate 10 which was a test piece. In the following, tensile strength of Z3136 was referred to as TSS and tensile strength of Z3137 was referred to as CTS. Acceptance criteria were TSS ≥ 8 kN and CTS ≥ 5 kN.

To obtain not-indispensable but preferable performance values, the welded joint was also subjected to JASO-CCT (Japanese Automobile Standards Organization Cyclic Corrosion Test) in which a welded joint was subjected to repetition of spraying of salt water, drying, and moistening to cause accelerated corrosion, through 28 days. It was then subjected to the same breaking tests as described above to obtain TSS after corrosion and CTS after corrosion. Acceptance criteria for these preferable performance were that they should be 80% or larger of respective values of the tests without corrosion.

In Table 1, Comparative Examples are denoted by Nos. A1 to A5 and Examples are denoted by Nos. A6 to A16. (Symbol U means "used" and NU means "not used," and symbol F means "formed" and NF means "not formed.")

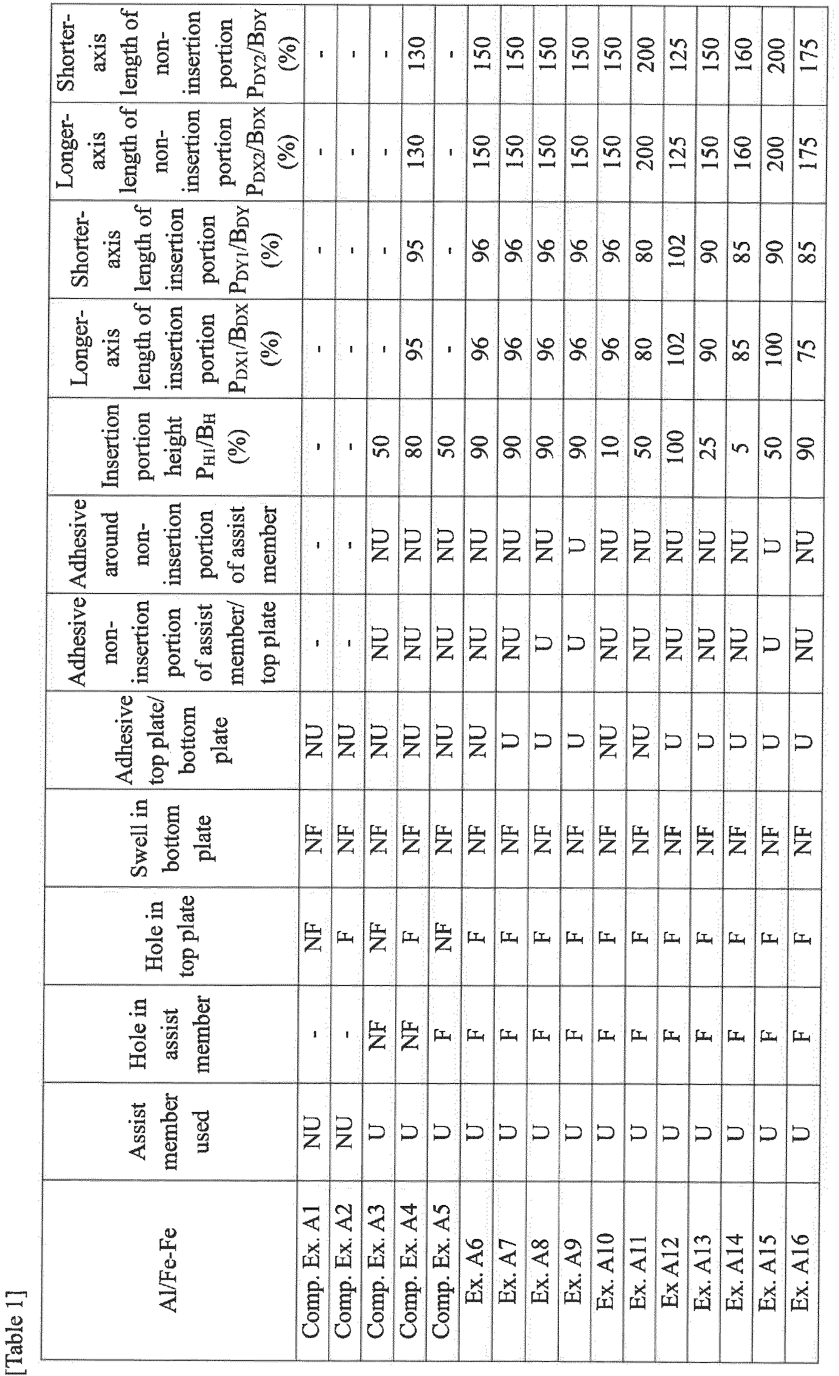

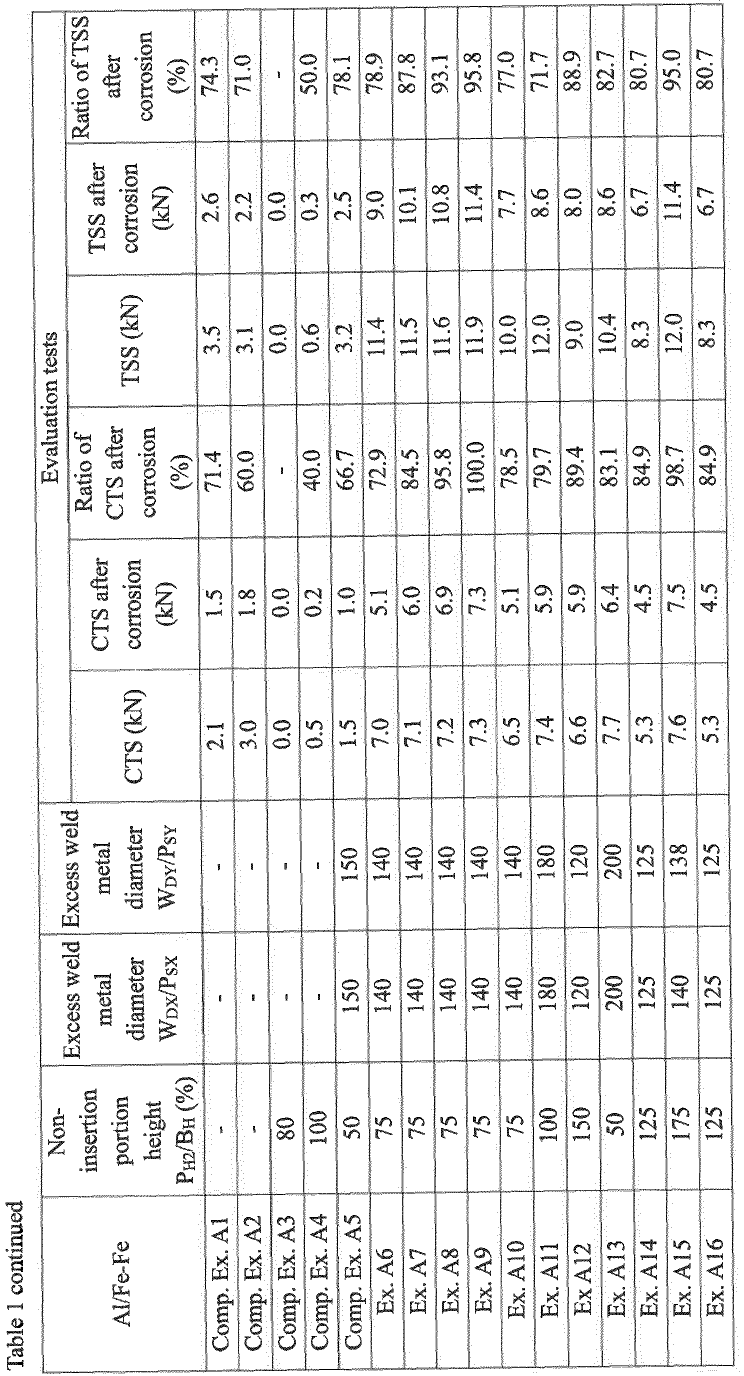

In No. A1, no joining assist member was used, no hole was made through the top plate 10, and arc welding was performed directly on the top plate 10. No adhesive was used. Since a steel welding wire and an aluminum base material were melt-mixed, a weld metal formed was very fragile intermetallic compounds and TSS and CTS were low.

In No. A2, arc welding was performed without using the joining assist member 30 though a round-corner rectangular hole 11 having a longer-axis length of 9.0 mm and a shorter-axis length of 7.0 mm was made through the top plate 10. Since the aluminum mixing proportion of a weld metal was smaller than in No. A1, the amount of intermetallic compounds was small and the degree of embrittlement was low. However, TSS and CTS were still low.

In No. A3, the joining assist member 30 was put on the top plate 10 through which no hole was made and arc welding was performed from above the joining assist member 30. The material of the joining assist member 30 was JIS G3106 SM490C (this also applies to the following samples of Examples A) and its external shape was similar to the shape of the hole 11. No hole was made through the joining assist member 30. As a result, weld penetration into the bottom plate 20 through the joining assist member 30 and the top plate 10 could not be caused and the welding failed.

In No. A4, the joining assist member 30 was put on the top plate 10 through which a round-corner rectangular hole 11 having a longer-axis length of 9.0 mm and a shorter-axis length of 7.0 mm was made and arc welding was performed from above the joining assist member 30. No hole was made through the joining assist member 30. As a result, there was some weld penetration into the bottom plate 20 through the joining assist member 30. However, the weld penetration width in the bottom plate 20 was very small and the sample was broken easily in the breaking tests.

In No. A5, the joining assist member 30 was put on the top plate 10 through which no hole was made and arc welding was performed from above the joining assist member 30. A round-corner rectangular hole having a longer-axis length of 7.0 mm and a shorter-axis length of 5.0 mm was made through the joining assist member 30. As a result, as in No. A1, a steel welding wire and an aluminum base material were melt-mixed to form a weld metal. Thus, the weld metal formed was very fragile intermetallic compounds and TSS and CTS were low.

On the other hand, in Nos. A6 to A16, a round-corner rectangular joining assist member 30 was put on the top plate 10 through which a round-corner rectangular hole 11 having a longer-axis length of 9.0 mm and a shorter-axis length of 7.0 mm was made and arc welding was performed from above the joining assist member 30. A round-corner rectangular hole having a proper size in a range that complies with the invention was formed through the joining assist member 30. The joining assist member 30 had a stepped shape including the insertion portion 31 formed to be inserted in the hole 11 of the top plate 10. In these samples, inflow of aluminum into a weld metal 40 formed was restricted to zero or a very small amount by virtue of the presence of the joining assist member 30, whereby a high-quality weld metal was formed. Furthermore, since the degree of weld penetration into the bottom plate 20 was sufficiently high and the non-insertion portion of the joining assist member 30 was larger in area than the hole 11 of the top plate 10, full coming-off was prevented and high CTS was obtained in the cross tension test. Still further, in the samples (Nos. A7 to A9 and A12 to A16) in which a normal temperature quick setting type two-liquid-mixing adhesive for metal was applied at appropriate locations, an effect of preventing electric corrosion at aluminum-steel interfaces was obtained, whereby reduction in CTS and TSS due to corrosion was suppressed and high CTS and TSS after corrosion were obtained. More specifically, it is seen that the CTS after corrosion and the TSS after corrosion increase as the number of adhesive application locations increases in order of No. A6, No. A7, No. A8, and No. A9. No. A15 exhibited good joint performance with no problems though the thickness P_{H2} of the non-insertion portion 32 of the joining assist member 30 was out of the most preferable range. However, No. A15 is not included in a most preferable range because the welding time was longer than in the other samples of Examples A and it was not flat and hence was poor in appearance.

### <Examples B>

In Examples B, a lap joint was used having a combination of a 0.8 mm-thick top plate 10 made of a magnesium alloy ASTM AZ31B and a 1.0 mm-thick bottom plate 20 made of 780 MPa-class high tensile strength steel. This lap joint was joined by arc welding by an AC TIG welding method using an 100% Ar gas as a shielding gas while inserting a 1.0 mm-diameter JIS Z3317 W55-1CM3 steel welding wire as a non-conduction filler and moving a tungsten electrode and the filler wire.

This welded joint 1 was subjected to breaking tests according to JIS Z3136 and JIS Z3137. The longer axis of the hole 11 of the top plate 10 and the longer axis of the hollow portion 33 of the joining assist member 30 were set so as to be directed to the shorter side of the rectangular top plate 10 which was a test piece. In the following, tensile strength of Z3136 was referred to as TSS and tensile strength of Z3137 was referred to as CTS. Acceptance criteria were TSS ≥ 4 kN and CTS ≥ 3 kN.

To obtain not-indispensable but preferable performance, as in Examples A, the welded joint 1 was also subjected to JASO-CCT for 28 days and then subjected to the same breaking tests as described above to obtain TSS after corrosion and CTS after corrosion. Acceptance criteria for these preferable performance were that they should be 80% or larger of respective values of the tests without corrosion.

In Table 2, Comparative Examples are denoted by Nos. B1 to B5 and Examples are denoted by Nos. B6 to B16.

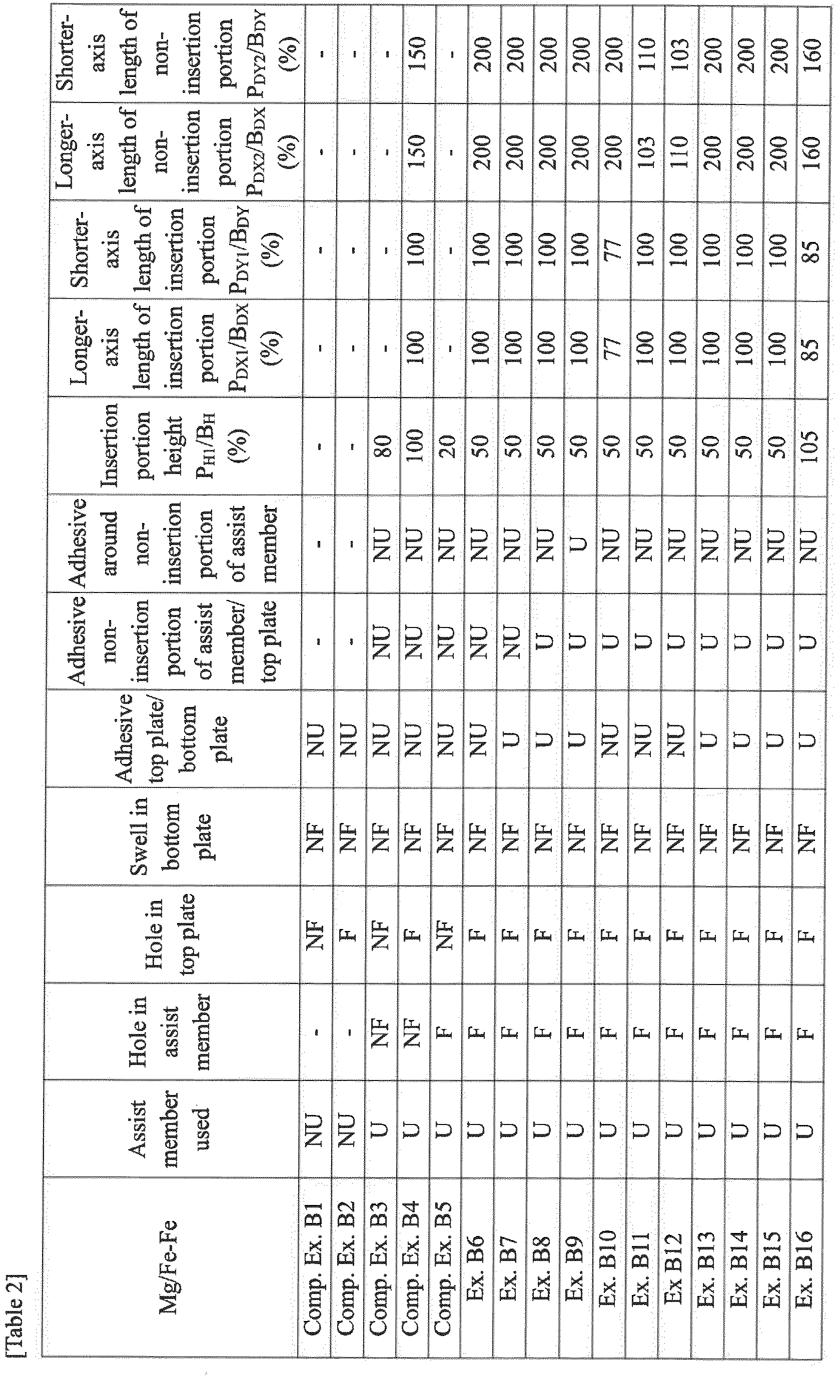

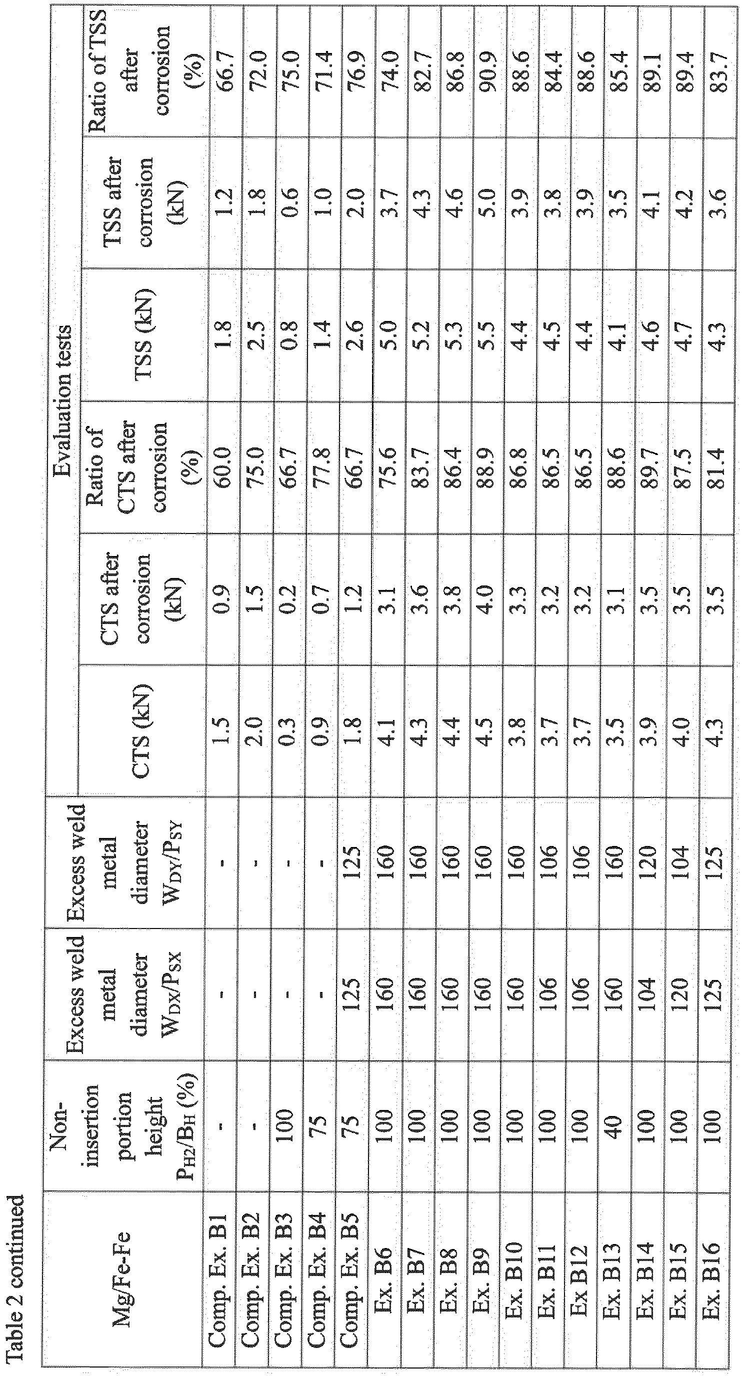

In No. B1, no joining assist member was used, no hole was made through the top plate 10, and arc welding was performed directly on the top plate 10. No adhesive was used. Since a steel welding wire and a magnesium base material were melt-mixed, a weld metal formed was very fragile intermetallic compounds and TSS and CTS were low.

In No. B2, arc welding was performed without using the joining assist member though a half circle-rectangle-half circle hole 11 having a longer-axis length of 7.0 mm and a shorter-axis length of 5.0 mm was made through the top plate 10. Since the magnesium alloy mixing proportion of a weld metal was smaller than in No. B1, the amount of intermetallic compounds was small and the degree of embrittlement was low. However, TSS and CTS were still low.

In No. B3, the joining assist member 30 was put on the top plate 10 through which no hole was made and arc welding was performed from above the joining assist member 30. The material of the joining assist member 30 was JIS G3101 SS400 and its external shape was a circle (this material and external shape also apply to the following samples of Examples B). No hole was made through the joining assist member 30. As a result, there was some weld penetration into the bottom plate 20 through the joining assist member 30 and the top plate 10. However, the weld penetration width in the bottom plate 20 was very small and the sample was broken easily in the breaking tests.

In No. B4, the joining assist member 30 was put on the top plate 10 through which the same elongated-circle-shaped hole 11 as formed in No. B2 was made and arc welding was performed from above the joining assist member 30. No hole was made through the joining assist member 30. As a result, there was some weld penetration into the bottom plate 20 through the joining assist member 30. However, the weld penetration width in the bottom plate 20 was very small and the sample was broken easily in the breaking tests.

In No. B5, the joining assist member 30 was put on the top plate 10 through which no hole was made and arc welding was performed from above the joining assist member 30. A half circle-rectangle-half circle hole having a longer-axis length of 5.5 mm and a shorter-axis length of 3.5 mm was made through the joining assist member 30. As in No. B1, a steel welding wire and a magnesium alloy base material were melt-mixed to form a weld metal. Thus, the weld metal formed was very fragile intermetallic compounds and TSS and CTS were low.

On the other hand, in Nos. B6 to B16, the joining assist member 30 was put on the top plate 10 through which a half circle-rectangle-half circle hole 11 having a longer-axis length of 7.0 mm and a shorter-axis length of 5.0 mm was made and arc welding was performed from above the joining assist member 30. A half circle-rectangle-half circle hole having a proper size in a range that complies with the invention was formed through the joining assist member 30. The joining assist member 30 had a stepped shape including the insertion portion 31 formed to be inserted in the hole 11 of the top plate 10. In these samples, inflow of magnesium into a weld metal 40 formed was restricted to zero or a very small amount by virtue of the presence of the insertion portion 31 of the joining assist member 30, whereby a high-quality weld metal 40 was formed. Furthermore, since the degree of weld penetration into the bottom plate 20 was sufficiently high and the non-insertion portion 32 of the joining assist member 30 was larger in area than the hole 11 of the top plate 10, full coming-off was prevented and high CTS was obtained in the cross tension test. Still further, in the samples (Nos. B7 to B16) in which an adhesive was applied at appropriate locations, an effect of preventing electric corrosion at magnesium alloy-steel interfaces was obtained, whereby reduction in CTS and TSS due to corrosion was suppressed and high CTS and TSS after corrosion were obtained. More specifically, it is seen that the CTS after corrosion and the TSS after corrosion increase as the number of adhesive application locations increases in order of No. B6, No. B7, No. B8, and No. B9.

### <Examples C>

In Examples C, a lap joint was used having a combination of a 3.6 mm-thick top plate 10 made of an aluminum alloy A6061 and a 2.6 mm-thick bottom plate 20 made of 400 MPa-class steel. This lap joint was joined by arc welding by a coated arc welding method using a 4.0 mm-diameter JIS Z3224 ENi6062 Ni alloy coated arc welding rod while moving the welding rod. In the case of making a hole through the top plate 10, the bottom plate 20 was subjected to deep drawing using a punch at the welding position so that the drawn portion went into the hole formed through the top plate 10 to a 1.8 mm height, that is, reaching the center in the thickness direction.

This welded joint 1 was subjected to breaking tests according to JIS Z3136 and JIS Z3137. The longer axis of the hole 11 of the top plate 10 and the longer axis of the hollow portion 33 of the joining assist member 30 were set so as to be directed to the shorter side of the rectangular top plate 10 which was a test piece. In the following, tensile strength of Z3136 was referred to as TSS and tensile strength of Z3137 was referred to as CTS. Acceptance criteria were TSS ≥ 9 kN and CTS ≥ 6 kN.

To obtain not-indispensable but preferable performance, as in Examples A and B, the welded joint 1 was also subjected to JASO-CCT for 28 days and then subjected to the same breaking tests as described above to obtain TSS after corrosion and CTS after corrosion. Acceptance criteria for these preferable performance were that they should be 80% or larger of respective values of the tests without corrosion.

In Table 3, Comparative Examples are denoted by Nos. C1 to C5 and Examples are denoted by Nos. C6 to C13.

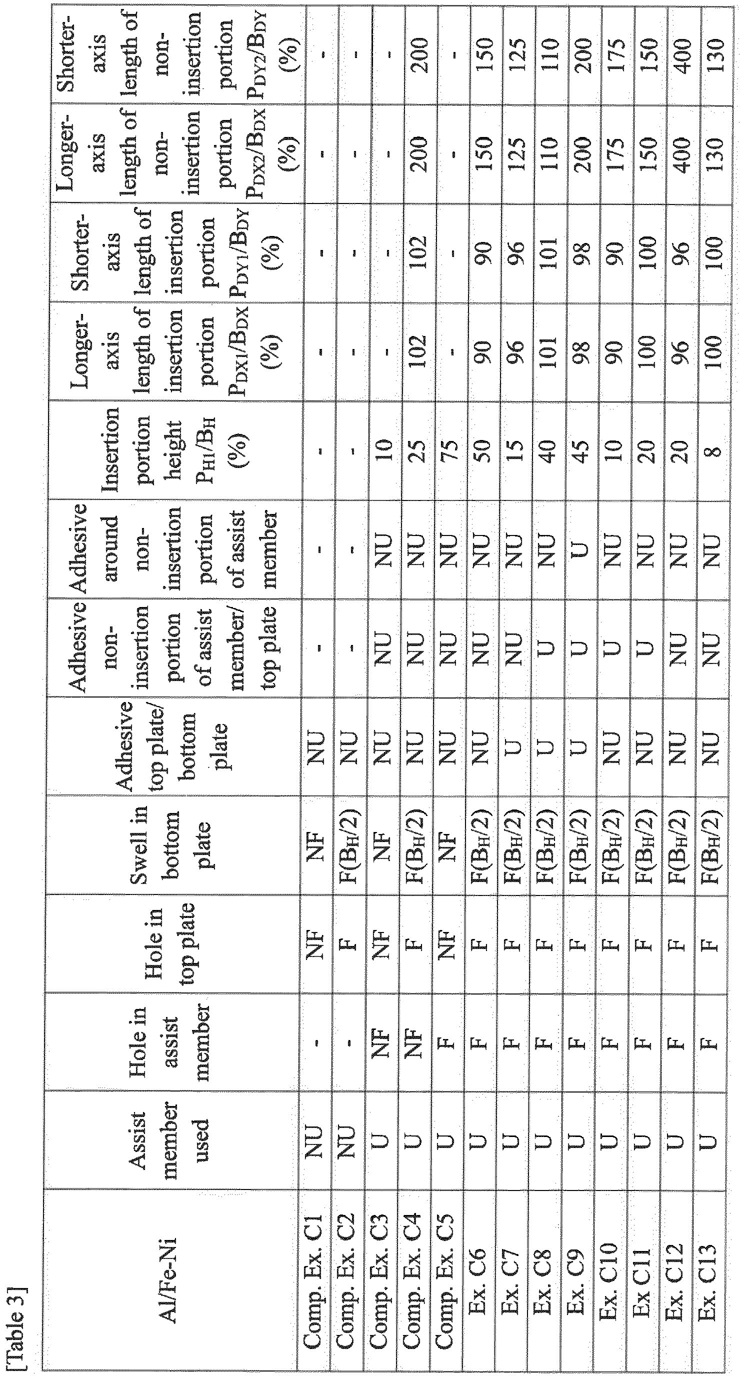

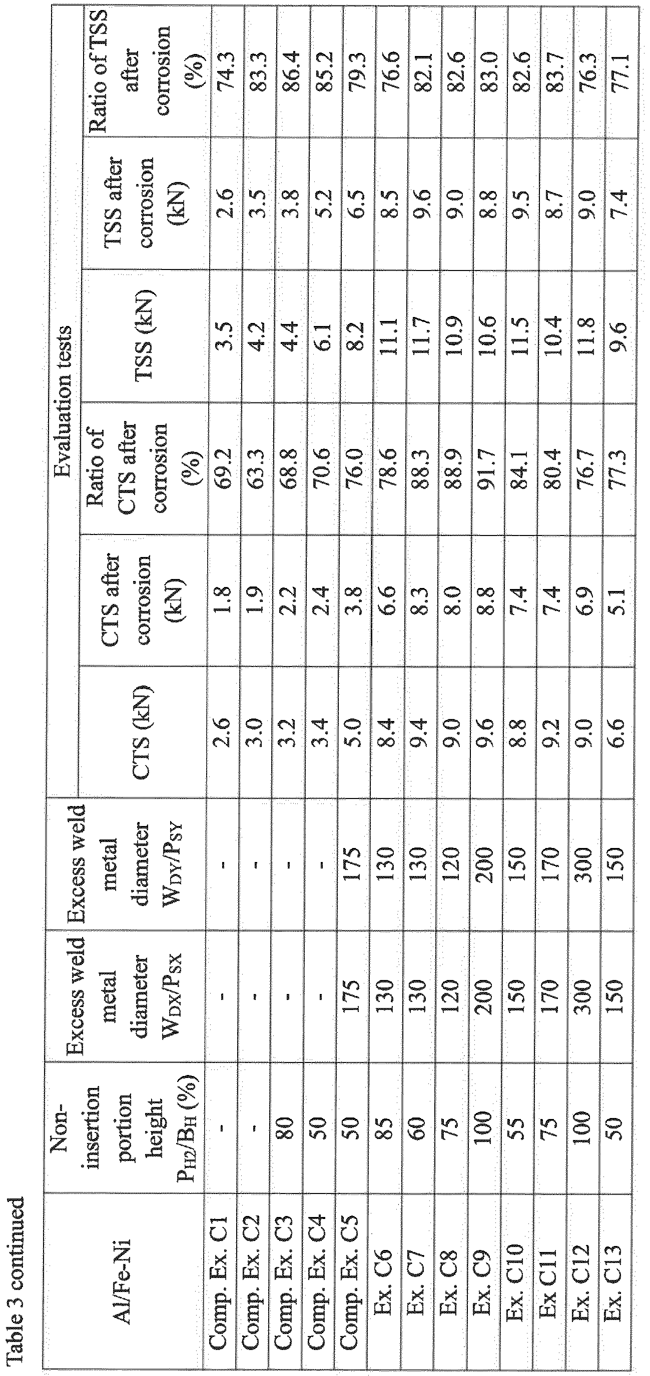

In No. C1, no joining assist member was used, no hole was made through the top plate 10, and arc welding was performed directly on the top plate 10. No adhesive was used. Since an Ni alloy welding rod and an aluminum base material were melt-mixed, a weld metal formed was very fragile intermetallic compounds and TSS and CTS were low.

In No. C2, arc welding was performed without using the joining assist member 30 though an elliptical hole 11 having a longer-axis length of 12.0 mm and a shorter-axis length of 9.0 mm was made through the top plate 10. Since the aluminum alloy mixing proportion of a weld metal was smaller than in No. C1, the amount of intermetallic compounds was small and the degree of embrittlement was low. However, TSS and CTS were still low.

In No. C3, the joining assist member 30 was put on the top plate 10 through which no hole was made and arc welding was performed from above the joining assist member 30. The material of the joining assist member 30 was JIS G4051 S12C and its external shape was a round-corner square (this material and external shape also apply to the following samples of Examples C). No hole was made through the joining assist member 30. As a result, weld penetration into the bottom plate 20 through the joining assist member 30 and the top plate 10 could not be caused and the welding failed.

In No. C4, the joining assist member 30 was put on the top plate 10 through which an elliptical hole 11 having a longer-axis length of 12.0 mm and a shorter-axis length of 9.0 mm was made and arc welding was performed from above the joining assist member 30. No hole was made through the joining assist member 30. As a result, there was some weld penetration into the bottom plate 20 through the joining assist member 30. However, the weld penetration width in the bottom plate 20 was very small and the sample was broken easily in the breaking tests.

In No. C5, the joining assist member 30 was put on the top plate 10 through which no hole was made and arc welding was performed from above the joining assist member 30. An elliptical hole having a longer-axis length of 9.5 mm and a shorter-axis length of 6.5 mm was made through the joining assist member 30. As in No. C1, an Ni alloy welding rod and a magnesium alloy base material were melt-mixed to form a weld metal. Thus, the weld metal formed was very fragile intermetallic compounds and TSS and CTS were low.

On the other hand, in Nos. C6 to C13, a round-corner square joining assist member 30 was put on the top plate 10 through which an elliptical hole 11 having a longer-axis length of 12.0 mm and a shorter-axis length of 9.0 mm was made and arc welding was performed from above the joining assist member 30. An elliptical hole having a proper size in a range that complies with the invention was formed through the joining assist member 30. The joining assist member 30 had a stepped shape including the insertion portion 31 formed to be inserted in the hole 11 of the top plate 10. In these samples, inflow of aluminum into a weld metal formed was restricted to zero or a very small amount by virtue of the presence of the insertion portion 31 of the joining assist member 30, whereby a high-quality weld metal was formed. Furthermore, since the degree of weld penetration into the bottom plate 20 was sufficiently high and the non-insertion portion 32 of the joining assist member 30 was larger in area than the hole 11 of the top plate 10, full coming-off was prevented and high CTS was obtained in the cross tension test. Although the top plate 10 was relatively as thick, 3.6 mm, the welding efficiency was increased and a burn-through preventing effect was obtained because the distance between the joining assist member 30 and the bottom plate 20 was decreased at the welding location by the deep drawing of the bottom plate 20. Still further, in the samples (Nos. C7 to C11) in which an adhesive was applied at appropriate locations, an effect of preventing electric corrosion at aluminum-steel interfaces was obtained, whereby reduction in CTS and TSS due to corrosion was suppressed and high CTS and TSS after corrosion were obtained.

### <Examples D>

In Examples D, a lap joint was used having a combination of a 1.2 mm-thick top plate 10 made of an aluminum alloy A6N01 and a 1.2 mm-thick bottom plate 20 made of SPCC steel. This lap joint was joined by arc welding by a self-shielded arc welding method using a 1.2 mm-diameter JIS Z3313 T49YT4-0NA steel wire containing flux while moving the welding wire.

This welded joint 1 was subjected to breaking tests according to JIS Z3136 and JIS Z3137. The longer axis of the hole 11 of the top plate 10 and the longer axis of the hollow portion 33 of the joining assist member 30 were set so as to be directed to the shorter side of the rectangular top plate 10 which was a test piece. In the following, tensile strength of Z3136 was referred to as TSS and tensile strength of Z3137 was referred to as CTS. Acceptance criteria were TSS ≥ 6 kN and CTS ≥ 4 kN.

To obtain not-indispensable but preferable performance, as in Examples A, B, and C, the welded joint 1 was also subjected to JASO-CCT for 28 days and then subjected to the same breaking tests as described above to obtain TSS after corrosion and CTS after corrosion. Acceptance criteria for preferable performance values were that they should be 80% or larger of respective values of the tests without corrosion.

In Table 4, Comparative Examples are denoted by Nos. D1 and D2 and Examples are denoted by Nos. D3 to D5.

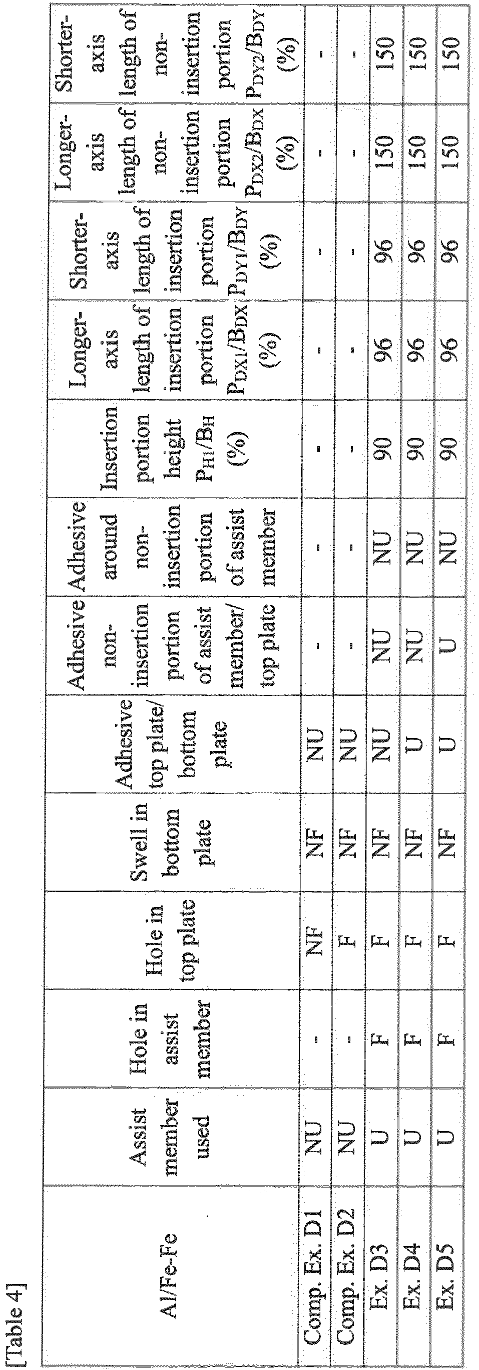

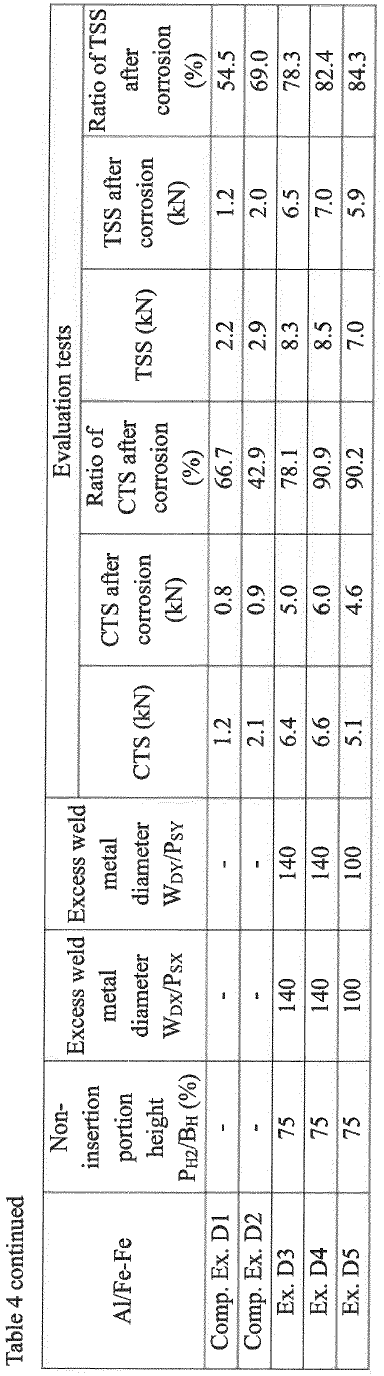

In No. D1, no joining assist member was used, no hole was made through the top plate 10, and arc welding was performed directly on the top plate 10. No adhesive was used. Since a steel welding wire and an aluminum base material were melt-mixed, a weld metal formed was very fragile intermetallic compounds and TSS and CTS were low.

In No. D2, arc welding was performed without using the joining assist member 30 though a 9.0 mm × 6.0 mm rectangular hole 11 was made through the top plate 10. Since the aluminum alloy mixing proportion of a weld metal was smaller than in No. D1, the amount of intermetallic compounds was small and the degree of embrittlement was low. However, TSS and CTS were still low.

On the other hand, in Nos. D3 to D5, a circular joining assist member 30 produced by working a JIS G3106 SM490A plate was put on the top plate 10 through which a 9.0 mm × 6.0 mm rectangular hole 11 was made and arc welding was performed from above the joining assist member 30. A rectangular hole having a proper size in a range that complies with the invention was formed through the joining assist member 30. The joining assist member 30 had a stepped shape including the insertion portion 31 formed to be inserted in the hole 11 of the top plate 10. In these samples, the mixing of aluminum into a weld metal 40 formed was restricted to zero or a very small amount by virtue of the presence of the insertion portion 31 of the joining assist member 30, whereby a high-quality weld metal 40 was formed. Furthermore, since the degree of weld penetration into the bottom plate 20 was sufficiently high and the non-insertion portion 32 of the joining assist member 30 was larger in area than the hole 11 of the top plate 10, full coming-off was prevented and high CTS was obtained in the cross tension test. Still further, in the samples (Nos. D4 and D5) in which an adhesive was applied at appropriate locations, an effect of preventing electric corrosion at aluminum-steel interfaces was obtained, whereby reduction in CTS and TSS due to corrosion was suppressed and the CTS after corrosion and the TSS after corrosion were high. More specifically, the CTS after corrosion and the TSS after corrosion of the sample of No. D4 in which an adhesive was applied were higher than those of the sample of No. D3 in which no adhesive was applied.

### <Examples E>

In Examples E, a lap joint was used having a combination of a 4.0 mm-thick top plate 10 made of an aluminum alloy A7N01 and a 3.0 mm-thick bottom plate 20 made of 1,180 MPa-class high tensile strength steel. A 1.5 mm-height swell portion 21 was formed by drawing at a welding position in the bottom plate 20. This lap joint was joined by arc welding by a plasma arc welding method using a 1.2 mm-diameter JIS Z3321 YS309L stainless steel welding wire and using 99% Ar and 1% H₂ as a shielding gas and 100% Ar as a plasma gas while moving the welding wire.

This welded joint 1 was subjected to breaking tests according to JIS Z3136 "Test piece dimensions and test method of shearing test of resistance spot and projection welded joint" and JIS Z3137 "Cross tension test for resistance spot and projection welded joint." The longer axis of the hole 11 of the top plate 10 and the longer axis of the hollow portion 33 of the joining assist member 30 were set so as to be directed to the shorter side of the rectangular top plate 10 which was a test piece. In the following, tensile strength of Z3136 was referred to as TSS and tensile strength of Z3137 was referred to as CTS. Acceptance criteria were TSS ≥ 10 kN and CTS ≥ 8 kN.

To obtain not-indispensable but preferable performance, as in Examples A to D, the welded joint 1 was also subjected to JASO-CCT for 28 days and then subjected to the same breaking tests as described above to obtain TSS after corrosion and CTS after corrosion. Acceptance criteria for preferable performance were that they should be 80% or larger of respective values of the tests without corrosion.

In Table 5, Examples are denoted by Nos. E1 to E3.

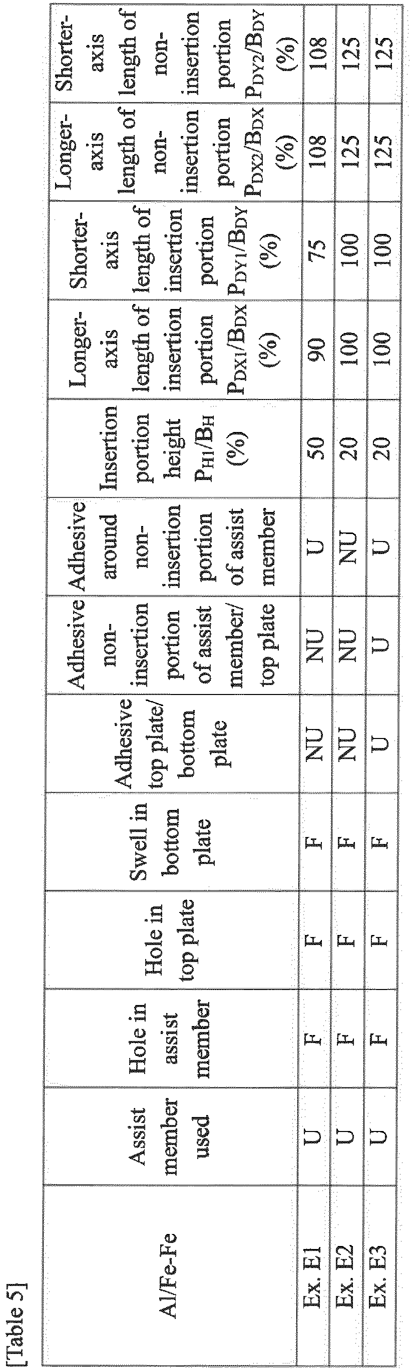

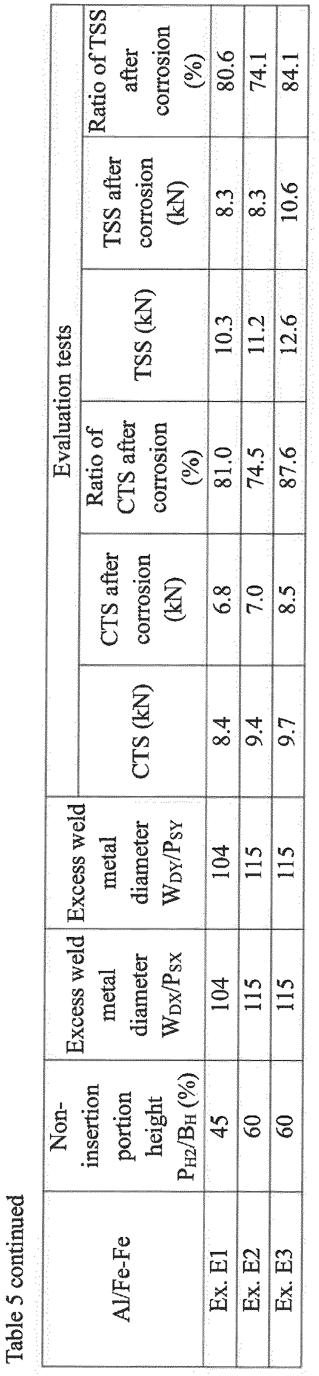

In Nos. E1 to E3, a rectangular joining assist member 30 produced by working a SUS304 stainless steel plate was put on the top plate 10 through which a 13.0 mm × 10.0 mm round-corner rectangular hole was made and arc welding was performed from above the joining assist member 30. A round-corner rectangular hole having a proper size in a range that complies with the invention was formed through the joining assist member 30. The joining assist member 30 had a stepped shape including the insertion portion 31 formed to be inserted in the hole 11 of the top plate 10. In these samples, inflow of aluminum into a weld metal 40 formed was restricted to zero or a very small amount by virtue of the presence of the insertion portion 31 of the joining assist member 30, whereby a high-quality weld metal was formed. Furthermore, since the degree of weld penetration into the bottom plate 20 was sufficiently high and the non-insertion portion 32 of the joining assist member 30 was larger in area than the hole 11 of the top plate 10, full coming-off was prevented and high CTS was obtained in the cross tension test. Although the top plate 10 was relatively as thick, 4.0 mm, the welding efficiency was increased and a burn-through preventing effect was obtained because the distance between the joining assist member 30 and the bottom plate 20 was decreased at the welding location by the deep drawing of the bottom plate 20. Still further, in the samples (Nos. E1 and E3) in which an adhesive was applied at appropriate locations, an effect of preventing electric corrosion at aluminum-steel interfaces was obtained, whereby reduction in CTS and TSS due to corrosion was suppressed and the CTS after corrosion and the TSS after corrosion were high. More specifically, the CTS after corrosion and the TSS after corrosion of No. E3 in which an adhesive was applied were higher than those of No. E2 in which no adhesive was applied.

The present application is based on Japanese Patent Application No. 2016-182964 filed on September 20, 2016, the disclosure of which is incorporated herein by reference.

### Description of Symbols

10: Top plate
11: Hole
20: Bottom plate
30: Joining assist member
31: Insertion portion
32: Non-insertion portion
33: Hollow portion
40: Weld metal
W: Melting portion
Wa: Excess weld metal

## Claims

1. An arc welding method for dissimilar material joining for joining a first plate made of an aluminum alloy or a magnesium alloy and a second plate made of steel, the method comprising:
a step of making a non-circular hole having different longitudinal and lateral lengths through the first plate;
a step of overlapping the first plate with the second plate;
a step of inserting a joining assist member made of steel into the hole formed in the first plate, the joining assist member having a stepped external shape including an insertion portion and a non-insertion portion and having a non-circular hollow portion having different longitudinal and lateral lengths formed to penetrate through the insertion portion and the non-insertion portion; and
a step of filling the hollow portion of the joining assist member with a weld metal and welding the second plate and the joining assist member by any method of the following (a) to (e):
(a) a gas-shielded arc welding method using, as a consumable electrode, a welding wire to provide the weld metal made of an iron alloy or a nickel alloy;
(b) a non-gas arc welding method using the welding wire as a consumable electrode;
(c) a gas tungsten arc welding method using the welding wire as a non-consumable electrode filler;
(d) a plasma arc welding method using the welding wire as a non-consumable electrode filler; and
(e) a coated arc welding method using, as a consumable electrode, a coated arc welding rod to provide the weld metal made of an iron alloy or a nickel alloy.

2. The arc welding method for dissimilar material joining according to claim 1, wherein the second plate has a swell portion formed by drawing, and the swell portion of the second plate is placed in the hole of the first plate in the overlapping step.

3. The arc welding method for dissimilar material joining according to claim 1, further comprising, before the overlapping step, a step of applying an adhesive to at least one of overlapped surfaces of the first plate and the second plate around the hole over its entire circumference.

4. The arc welding method for dissimilar material joining according to claim 1, wherein in the placing step, an adhesive is applied to at least one of confronting surfaces between the joining assist member and the first plate opposed to the joining assist member.

5. The arc welding method for dissimilar material joining according to claim 1, wherein in the placing step or after the filling and welding step, an adhesive is applied to a boundary between the joining assist member and a surface of the first plate.

6. The arc welding method for dissimilar material joining according to claim 1, wherein the insertion portion of the joining assist member has a height P_{H1} of 10% or larger and 100% or smaller of a thickness B_{H} of the first plate.

7. The arc welding method for dissimilar material joining according to claim 1, wherein the insertion portion of the joining assist member has a longer-axis length P_{DX1} of 80% or larger and 105% or smaller of a longer-axis length B_{DX} of the hole of the first plate.

8. The arc welding method for dissimilar material joining according to claim 1, wherein the insertion portion of the joining assist member has a shorter-axis length P_{DY1} of 80% or larger and 105% or smaller of a shorter-axis length B_{DY} of the hole of the first plate.

9. The arc welding method for dissimilar material joining according to claim 1, wherein the non-insertion portion of the joining assist member has a longer-axis length P_{DX2} of 105% or larger of a longer-axis length B_{DX} of the hole 11 of the first plate.

10. The arc welding method for dissimilar material joining according to claim 1, wherein the non-insertion portion of the joining assist member has a shorter-axis length P_{DY2} of 105% or larger of a shorter-axis length B_{DY} of the hole 11 of the first plate.

11. The arc welding method for dissimilar material joining according to claim 1, wherein the non-insertion portion of the joining assist member has a thickness P_{H2} of 50% or larger and 150% or smaller of a thickness B_{H} of the first plate.

12. The arc welding method for dissimilar material joining according to claim 1, wherein in the filling and welding step, an excess weld metal is formed on a surface of the joining assist member and the excess weld metal has a longer-axis length W_{DX} of 105% or larger of a longer-axis length P_{SX} of the hollow portion of the joining assist member.

13. The arc welding method for dissimilar material joining according to claim 1, wherein in the filling and welding step, an excess weld metal is formed on a surface of the joining assist member and the excess weld metal has a shorter-axis length W_{DY} of 105% or larger of a shorter-axis length P_{SY} of the hollow portion of the joining assist member.

14. A joining assist member to be used for the arc welding method for dissimilar material joining according to any one of claims 1 to 13, the joining assist member being made of steel, having a stepped external shape including an insertion portion and a non-insertion portion, and having a non-circular hollow portion having different longitudinal and lateral lengths formed to penetrate through the insertion portion and the non-insertion portion.

15. A dissimilar material welded joint comprising a first plate made of an aluminum alloy or a magnesium alloy and a second plate made of steel and arc-welded to the first plate,
wherein the first plate has a non-circular hole having different longitudinal and lateral lengths that reaches an overlapped surface to the second plate,
the dissimilar material welded joint further comprises a joining assist member made of steel, the joining assist member having a stepped external shape including an insertion portion inserted in the hole formed in the first plate and a non-insertion portion, and having a non-circular hollow portion having different longitudinal and lateral lengths formed to penetrate through the insertion portion and the non-insertion portion, and
the hollow portion of the joining assist member is filled with a weld metal made of an iron alloy or a nickel alloy, and a melting portion is formed of the weld metal and a part of melted portions of the second plate and the joining assist member.

16. The dissimilar material welded joint according to claim 15, wherein a swell portion formed in the second plate is placed in the hole of the first plate.

17. The dissimilar material welded joint according to claim 15, comprising an adhesive applied to at least one of overlapped surfaces of the first plate and the second plate around the hole over its entire circumference.

18. The dissimilar material welded joint according to claim 15, comprising an adhesive applied to at least one of confronting surfaces between the joining assist member and the first plate opposed to the non-insertion portion.

19. The dissimilar material welded joint according to claim 15, comprising an adhesive applied to a boundary between the joining assist member and a surface of the first plate.

20. The dissimilar material welded joint according to claim 15, wherein the insertion portion of the joining assist member has a height P_{H1} of 10% or larger and 100% or smaller of a thickness B_{H} of the first plate.

21. The dissimilar material welded joint according to claim 15, wherein the insertion portion of the joining assist member has a longer-axis length P_{DX1} of 80% or larger and 105% or smaller of a longer-axis length B_{DX} of the hole of the first plate.

22. The dissimilar material welded joint according to claim 15, wherein the insertion portion of the joining assist member has a shorter-axis length P_{DY1} of 80% or larger and 105% or smaller of a shorter-axis length B_{DY} of the hole of the first plate.

23. The dissimilar material welded joint according to claim 15, wherein the non-insertion portion of the joining assist member has a longer-axis length P_{DX2} of 105% or larger of a longer-axis length B_{DX} of the hole of the first plate.

24. The dissimilar material welded joint according to claim 15, wherein the non-insertion portion of the joining assist member has a shorter-axis length P_{DY2} of 105% or larger of a shorter-axis length B_{DY} of the hole of the first plate.

25. The dissimilar material welded joint according to claim 15, wherein the non-insertion portion of the joining assist member has a thickness P_{H2} of 50% or larger and 150% or smaller of a thickness B_{H} of the first plate.

26. The dissimilar material welded joint according to claim 15, wherein an excess weld metal is formed on a surface of the joining assist member and the excess weld metal has a longer-axis length W_{DX} of 105% or larger of a longer-axis length P_{SX} of the hollow portion of the joining assist member.

27. The dissimilar material welded joint according to claim 15, wherein an excess weld metal is formed on a surface of the joining assist member and the excess weld metal has a shorter-axis length W_{DY} of 105% or larger of a shorter-axis length P_{SY} of the hollow portion of the joining assist member.
